(19) **Europäisches Patentamt / European Patent Office / Office européen des brevets**

(11) **EP 1 510 366 B1**

(12) # EUROPEAN PATENT SPECIFICATION

(45) Date of publication and mention
of the grant of the patent:
**14.05.2008 Bulletin 2008/20**

(51) Int Cl.:
*B60C 5/00* (2006.01)   *B60C 5/14* (2006.01)
*B60B 21/12* (2006.01)   *B65D 85/06* (2006.01)
*B60C 19/00* (2006.01)

(21) Application number: **03728105.2**

(22) Date of filing: **19.05.2003**

(86) International application number:
**PCT/JP2003/006233**

(87) International publication number:
**WO 2003/103989 (18.12.2003 Gazette 2003/51)**

(54) **ASSEMBLY OF PNEUMATIC TIRE AND RIM, SOUND SUPPRESSING BODY USED FOR THE ASSEMBLY, AND PNEUMATIC TIRE STORAGE METHOD**

ANORDNUNG FÜR LUFTREIFEN UND FELGE, FÜR DIE ANORDNUNG VERWENDETER SCHALLDÄMPFUNGSKÖRPER UND LUFTREIFENLAGERUNGSVERFAHREN

ENSEMBLE PNEUMATIQUE-JANTE, ELEMENT INSONORISANT UTILISE AVEC CET ENSEMBLE ET PROCEDE DE STOCKAGE DE PNEUMATIQUES

(84) Designated Contracting States:
**DE FR GB**

(30) Priority: **05.06.2002 JP 2002164791**

(43) Date of publication of application:
**02.03.2005 Bulletin 2005/09**

(73) Proprietor: **SUMITOMO RUBBER INDUSTRIES, LTD.**
**Kobe-shi,**
**Hyogo 651-0072 (JP)**

(72) Inventors:
• **YUKAWA, Naoki**
**Sumitomo Rubber Industries, Ltd**
**Kobe-shi, Hyogo 651-0072 (JP)**
• **TSUMORI, Isamu**
**Sumitomo Rubber Industries, Ltd**
**Kobe-shi, Hyogo 651-0072 (JP)**

• **SHIBA, Fumiaki**
**Sumitomo Rubber Industries, Ltd**
**Kobe-shi, Hyogo 651-0072 (JP)**
• **MINAGAWA, Yasuhisa**
**Sumitomo Rubber Industries, Ltd**
**Kobe-shi, Hyogo 651-0072 (JP)**

(74) Representative: **Manitz, Finsterwald & Partner GbR**
**Martin-Greif-Strasse 1**
**80336 München (DE)**

(56) References cited:
| | |
|---|---|
| EP-A- 1 253 025 | JP-A- 63 291 708 |
| JP-A- 63 317 472 | JP-A- 2002 178 712 |
| JP-U- 61 017 077 | US-A- 4 392 522 |
| US-B1- 6 209 601 | US-B1- 6 244 314 |
| US-B1- 6 343 843 | |

Printed by Jouve, 75001 PARIS (FR)

**Description**

Technical Field

The present invention relates to an assembly of a pneumatic tire and a rim capable of suppressing a road noise caused during running, a noise suppressing body used therefor, and a storage method of the pneumatic tire.

Background Technique

A road noise is one of tire noises caused when a vehicle runs on a road. The road noise has frequency in a range of 50 to 400Hz and causes a noise "goo". It is known that a main cause of this road noise is resonance vibration (cavity resonance) of air caused in a tire cavity.

The applicant has proposed, in Japanese Patent Application Laid-open No. 2002-67608, to dispose a band-like noise suppressing body made of sponge material in a tire cavity without fixing the noise suppressing body to a rim or a tire such that the noise suppressing body can move freely. According to this publication, the volume of the noise suppressing body is set to 0.4% or greater of the entire volume of the tire cavity, thereby effectively suppressing the cavity resonance. As a further research of the present inventors, however, since this noise suppressing body moved freely in the tire cavity during running, a large load was applied to the noise suppressing body during high speed running, and there was a drawback that the noise suppressing body was damaged or vibration was generated.

An assembly according to the preamble of claim 1 is known from US-A-4 392 522. EP-A-1 253 025 also showing an assembly of such kind constitutes prior art according to Article 54(3) EPC.

The present invention relates to an improvement of such a noise suppressing body. Based on an idea that the noise suppressing body is fixed to the tire cavity and its shape is improved, it is a first object of the invention to provide an assembly of a pneumatic tire and a rim capable of stably fixing the noise suppressing body even at the time of high speed running, and capable of preventing the noise suppressing body from being damaged and vibrated and capable of suppressing resonance for the long term.

Based on an idea that the noise suppressing body is previously provided at its bottom surface with an adhesive covered with a peel-paper, it is a second object of the invention to provide a noise suppressing body capable of effectively and easily affixing the noise suppressing body to the pneumatic tire or the rim.

Based on an idea that in a pneumatic tire before it is assembled to a rim in which the noise suppressing body is fixed to a tire-side cavity surface, the noise suppressing body is covered with a waterproof protecting member, it is a third object of the invention to provide a storage method of the pneumatic tire capable of preventing the noise suppressing body from absorbing water when the pneumatic tire is stored before it is assembled to the rim.

Disclosure of the Invention

These objects are achieved by the features of claims 1, 16 and 18, respectively.

In this specification, the "volume V2 of the noise suppressing body" means a virtual entire volume of the noise suppressing body, and a volume defined by an outer shape of the noise suppressing body including inside bubble and hollow. The "entire volume V1 of the tire cavity" is approximately obtained by the following equation 2) in a state in which a normal internal pressure is charged into the assembly and no load is applied thereto.

$$V1 = A \times \{(Di-Dr)/2 + Dr\} \times \pi \dots 2)$$

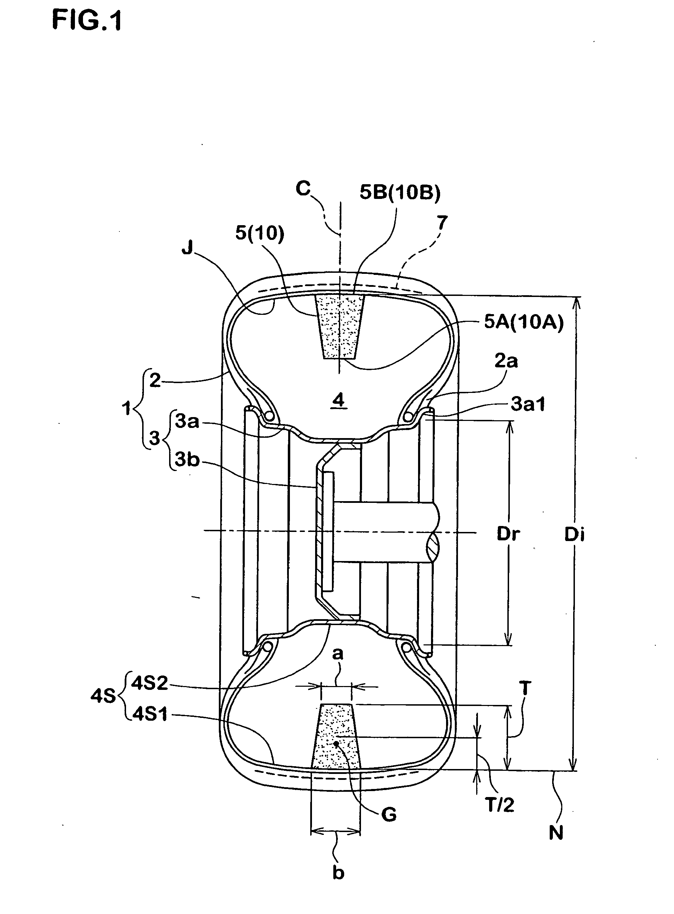

In the equation, "A" is a tire cavity area obtained by CT scanning the tire cavity in its normal state, "Di" is a maximum outer diameter of the tire cavity in the normal state shown in CT scanning the tire cavity in its normal state, "Di" is a maximum outer diameter of the tire cavity in the normal state shown in Fig. 1, and "Dr" is a rim diameter, and "$\pi$" is the ratio of the circumference of a circle to its diameter.

Further, "normal internal pressure" means an air pressure determined for each tire in each standard in a standard system including one on which a tire is based. The "normal internal pressure" is a maximum air pressure in JATMA, a maximum value described in "TIRE LOAD LIMITS AT VARIOUS COLD INFLATION PRESSURES" in TRA, and "INFLATION PRESSURE" in ETRTO. If the tire is for a passenger vehicle, the "normal internal pressure" should uniformly be 200 kPa while taking the actual using frequency into consideration.

Brief Description of the Drawings

Fig. 1 is a meridional sectional view showing one example of a first embodiment of an assembly of a pneumatic tire and a rim of the present invention.

Fig. 2 is a sectional view of the assembly in a circumferential direction taken along a tire equator.

Fig. 3 shows another example of the noise suppressing body of the first embodiment, and is a sectional view of the assembly in the circumferential direction taken along the tire equator.

Fig. 4 is a graph showing a relation between volume ratio (V2/V1) and a road noise.

Fig. 5 is an enlarged meridional sectional view of the assembly.

Figs. 6 (A) to 6 (E) is a sectional view showing one example of a meridional cross section of the noise suppressing body.

Fig. 7 is an explanatory view of a smooth surface in an adhering region of a tire-side inner hole surface.

Fig. 8(A) and 8(B) are sectional views for explaining a double-faces tape used for adhering the noise suppressing body.

Fig. 9 is a diagram for explaining a peel test.

Fig. 10 is a graph showing a relation between a shape coefficient (E) and a road noise.

Fig. 11 shows another example of the noise suppressing body in the first embodiment, and is a sectional view of the assembly in the circumferential direction taken along the tire equator.

Fig. 12 is an enlarged meridional sectional view of an illustrative example of a noise suppressing body.

Fig. 13 is an enlarged meridional sectional view of another illustrative example of a noise suppressing body.

Figs. 14 (A) and (B) show illustrative examples of a noise suppressing body, and are sectional views of the assembly in the circumferential direction taken along the tire equator.

Figs. 15 (A) to 15 (D) are diagrams showing one example of a protecting member.

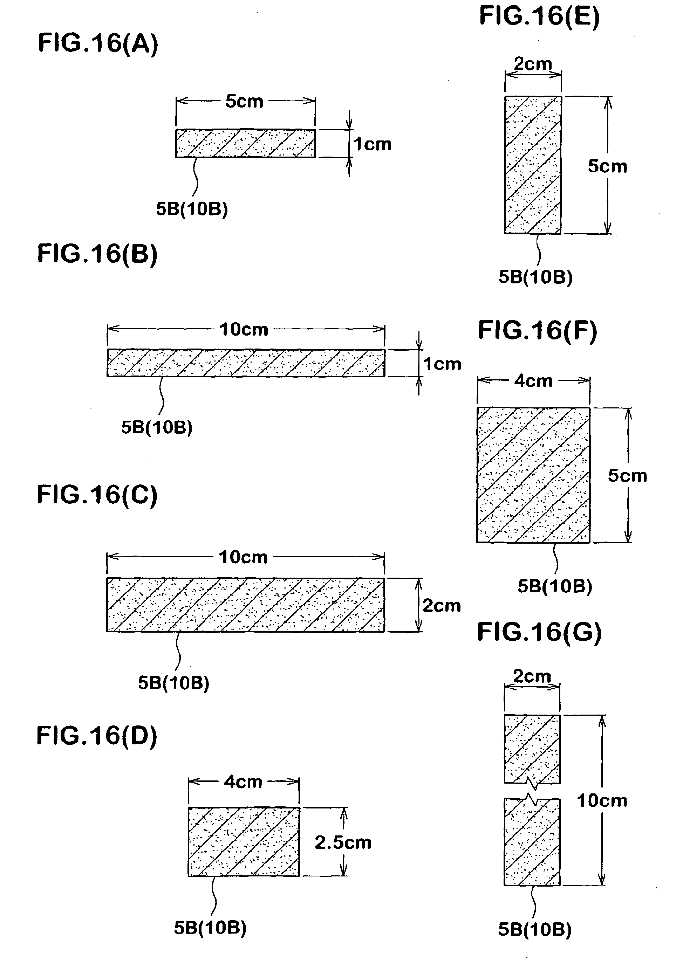

Figs. 16(A) to 16(G) are sectional views of another example of a meridional cross section of the noise suppressing body.

Figs. 17(A) to 17(D) are sectional views of another example of a meridional cross section of the noise suppressing body.

Figs. 18(A) to 18(C) are sectional views of another example of a meridional cross section of the noise suppressing body.

Figs. 19(A) and 19(B) are sectional views of another example of a meridional cross section of the noise suppressing body.

Best Mode for Carrying Out the Invention

An example of the present invention will be explained based on the drawings.

In Fig. 1, an assembly 1 includes a pneumatic tire 2 (simply "tire 2", in some cases) and a rim 3. By mounting the tire 2 on the rim 3, a tire cavity 4 surrounded by the tire 2 and the rim 3 is formed.

The rim 3 is of a known structure including an annular rim body 3a to which the tire 2 is mounted, and a disk 3b which supports the rim body 3a and is fixed to an axle. In this example, a normal rim defined by the standard such as JATMA is employed.

The tire 2 is a radial tire for a passenger vehicle for example, and the tire 2 is assembled to the rim in such a manner that a bead portion 2a is brought into tight contact with a flange 3a1 of the rim body 3a. The tire 2 has a tubeless structure in which a tire-side cavity surface 4S1 of a tire cavity surface 4S which surrounds the tire cavity 4 is formed of a so-called inner liner rubber which is a low air permeable rubber. With this configuration, the tire 2 forms the air-tight tire cavity 4 together with the rim body 3a.

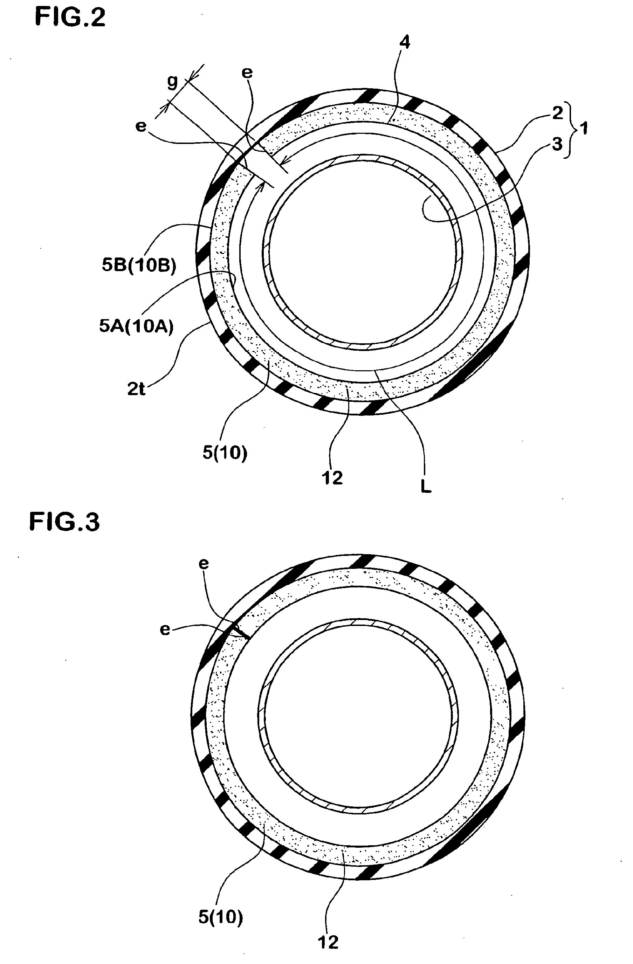

In the assembly 1, a noise suppressing body 5 made of sponge material and extending in the tire circumferential direction is disposed in the tire cavity 4. Figs. 2 and 3 show that the noise suppressing body 5 comprises one long band-like body 12 which continuously extends in the tire circumferential direction.

The sponge material is a spongiform porous structure, and examples of the sponge material are a sponge having open-cells obtained by blistering rubber or synthetic resin, and a material obtained by intertwining and integrally connecting animal fiber, vegetable fiber or synthetic resin. The "porous structure body" in this specification includes not only a body having the open-cell but also a body having independent bubbles. Since such a sponge material has high vibration isolation performance and noise absorbing performance, resonance energy generated in the tire cavity 4 can effectively be moderated and absorbed. As a result, the cavity resonance can be suppressed and the road noise can be reduced.

The sponge material can easily be deformed (i.e., shrunk and bent) and thus, the assembling performance to the rim is not deteriorated. Since the sponge material has a specific gravity smaller than that of a solid rubber body, adverse influence on a tire weight balance can be suppressed to a small value. The specific gravity of the sponge material is 0.005 to 0.06, preferably 0.010 to 0.05 and more preferably 0.016 to 0.05, and more preferably 0.016 to 0.035. If the specific gravity is less than 0. 005 or exceeds 0.06, the cavity resonance suppressing effect is lowered. In this example, there is shown a preferable example in which a sponge material of open-cell made of polyurethane is used.

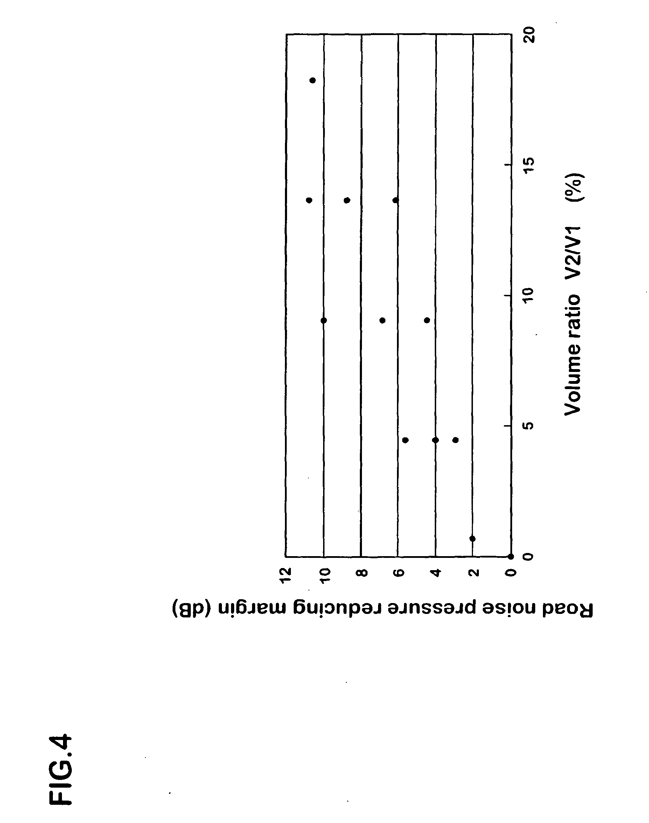

It is necessary to set a volume V2 of the noise suppressing body 5 made of sponge material to 0.4 to 20% of an entire volume V1 of the tire cavity 4. The present inventors carried out a road noise test under a condition that raw materials and specific gravity of sponge materials of the noise suppressing bodies 5 were the same, and only the volume V2 of the noise suppressing body 5 was changed with respect to the entire volume V1 of the tire cavity 4. One example of its result is shown in Fig. 4.

As shown in Fig. 4, there is obviously a correlation between the volume ratio (V2/V1) and the road noise, and if the ratio (V2/V1) is set to 0.4% or higher, a required reducing effect of road noise, preferably a reducing effect of 2dB or higher can be exhibited. It is preferable that the ratio (V2/V1) is set to 1% or higher, more preferably 2% or higher, and more preferably 4% or higher. If the volume ratio (V2/V1) exceeds 20% on the other hand, the reducing effect of the road noise reaches the top and the tire weight and cost are increased unnecessarily or weight balance is deteriorated and thus, it is not preferable. Thus, it is preferable that the upper limit of the volume ratio (V2/V1) is set to 10% or lower in a combination with the lower limit value.

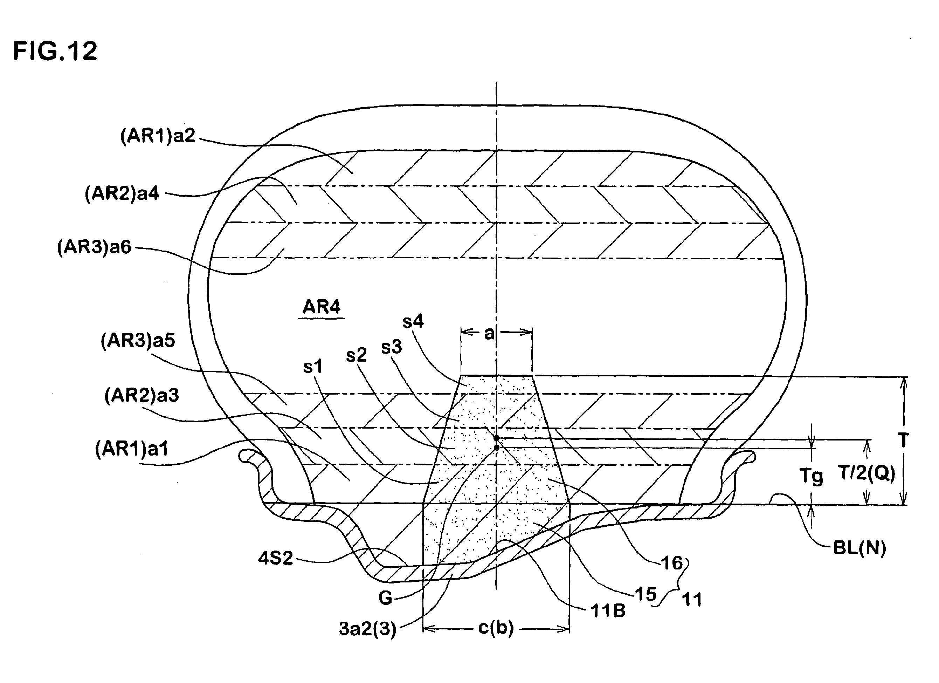

In the present invention, the noise suppressing body 5 is fixed to a tire-side cavity surface 4S1 and/or a rim-side cavity surface 4S2 of the tire cavity surface 4S. That is, the noise suppressing body 5 comprises a tire-side noise suppressing body 10 (shown in Figs. 1 to 3 and 5) whose bottom surface 10B is fixed to the tire-side cavity surface 4S1 and/or a rim-side noise suppressing body 11 (shown in Figs. 12 to 14) whose bottom surface 11B is fixed to the rim-side cavity surface 4S2.

A first embodiment in which the noise suppressing body 5 is the tire-side noise suppressing body 10, and a second embodiment in which the noise suppressing body 5 is the rim-side noise suppressing body 11 will be explained step-by-step.

The reason why the noise suppressing body 5 is fixed is that great centrifugal force and lateral force are applied to the noise suppressing body 5 during high speed running of the vehicle. If the noise suppressing body 5 is not fixed, it is possible that the noise suppressing body 5 itself collides against the tire cavity surface 4S and is damaged or destroyed, and the suppressing effect of the cavity resonance is lowered, the inner liner rubber forming the tire-side cavity surface 4S1 is damaged. Thus, in this invention, the noise suppressing body 5 is fixed to the tire-side cavity surface 4S1 or rim-side cavity surface 4S2 so that the noise suppressing body 5 is prevented from being destroyed during high speed running of the vehicle and the suppressing effect of the cavity resonance can be maintained for the long term.

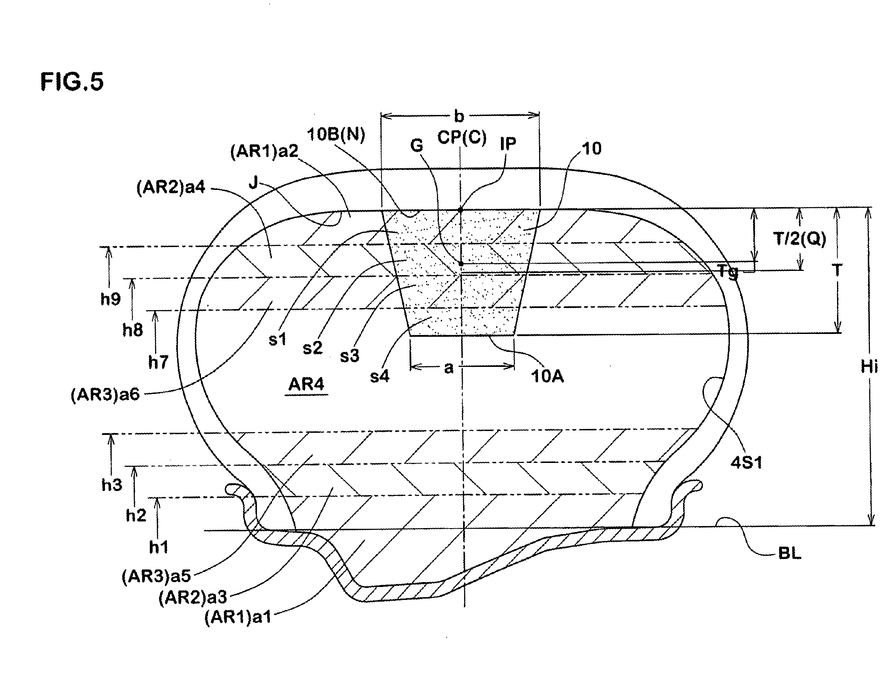

As shown in Figs. 1 and 5, in the first embodiment, the tire-side noise suppressing body 10 is fixed preferably to a tread region (J) in the tire-side cavity surface 4S1. This is because that the centrifugal force at the time of high speed running is applied radially outward, and if the tire-side noise suppressing body 10 is fixed to the tread region (J), the tire-side noise suppressing body 10 can be allowed to push against the tread region (J) by the centrifugal force and its function can effectively be restrained. Thus, it is possible to prevent the tire-side noise suppressing body 10 from being destroyed with smaller fixing force, and its fixed state can be prevented from being released.

From such a viewpoint, it is especially preferable to fix the tire-side noise suppressing body 10 to a central portion of the tread region (J) such that its width center line extends along the tire equator C. At that time, it is preferable that the tire-side noise suppressing body 10 is symmetric with respect to the tire equator (C) in the tire meridional cross section as in this embodiment. This is because that if the tire-side noise suppressing body 10 is asymmetric, since the left side and the right side of the body 10 have different lateral rigidities, the body is prone to fall toward the lower rigidity side. Here, the "tread region (J)" means a region between radial direction lines passing through both the outer ends of the belt layer 7.

Next, as a fixing method for fixing tire-side noise suppressing body 10 to the tire-side cavity surface 4S1, it is possible to employ a method for mechanically fixing the body 10 using a screw or a mounting bracket, or a method for assembling the body 10 in a tire producing procedure at the time of vulcanization molding.

It is preferable to adhere the body to the tire 2 after the vulcanization molding using adhesive in terms of cost, stability of adhesion and the like. In this case, water releasing agent or solvent releasing agent called inside paint is applied to the tire-side cavity surface 4S1 before the vulcanization molding for enhancing the releasing performance with respect to a bladder. Therefore, there is a tendency that the adhering strength is deteriorated. Thus, in order to enhance the adhering strength, it is desirable to remove the releasing agent before adhesion.

More specifically, it is possible to use a method for subjecting an adhering region (Y) (region where the noise suppressing body 10 is adhered) of the tire cavity surface 4S1 to buffing to physically remove the releasing agent, or a method for chemically removing the releasing agent using organic solvent. After the releasing agent is removed, and prior to applying the adhesive, primer can be applied to the tire cavity surface 4S1 and/or the tire-side noise suppressing body 10 to further enhance the adhering strength. For the tire 2, a solvent comprising synthetic rubber as a main component, and including toluene, methyl ethyl ketone (MEK) and dimethylformamide (DMF) is preferable as the primer. For the noise suppressing body 10, a solvent comprising synthetic rubber as a main component, and including toluene, methyl ethyl ketone and ethyl acetate is preferably used.

As the adhesive 9, it is possible to preferably use a solution type adhesive in which synthetic rubber is dissolved in organic solvent, and a liquid adhesive of synthetic rubber base such as latex type dispersed in water. Especially, chloroprene-based solution type adhesive using chloroprene rubber as the synthetic rubber has excellent adhesive force, and is soft and is strong against bending impact and thus, this adhesive can preferably be used. As the organic solvent, cyclohexane (alicyclic-base), acetone (ketone-base), hexane (aliphatic-base), or mixture thereof may be preferably used in terms of solbility, cost and influence on operation environment. At that time, a content of the chloroprene rubber is preferably 25 to 35 parts by weight when the entire synthetic rubber-based adhesive is 100 parts by weight. If the content is less than 25 parts by weight, there is a tendency that the adhering strength is deteriorated, and if the content exceeds 35 parts by weight, the viscosity becomes excessively high and it becomes difficult to apply the adhesive. As the adhering method, it is preferable to apply the adhesive on substantially the entire region where the tire-side cavity surface 4S1 and the bottom surface 10B of the tire-side noise suppressing body 10 come into contact with each other, and they are adhered to each other. Alternatively, the adhesive may be applied to the substantially entire contacting region in a spot manner to adhere.

In recent years, there is proposed a bladder in which a releasing film is formed on the surface thereof so that the necessity of using the releasing agent at the time of vulcanization molding is eliminated. Thus, if this bladder is used, the releasing agent does not attach to the tire-side cavity surface 4S1, and the adhering strength can be enhanced without removing the releasing agent.

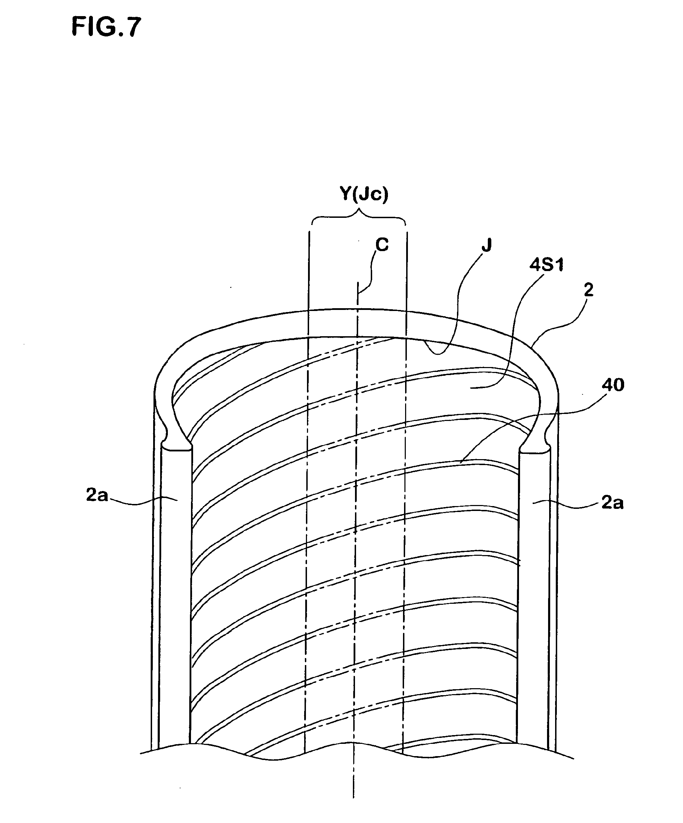

In order to enhance the adhering strength, it is preferable to form the adhering region (Y) into a smooth surface. Generally, an outer surface of the bladder is formed with a vent groove for preventing air from staying between the outer surface and the tire 2 at the time of vulcanization molding. Thus, as shown in Fig. 7, the tire-side cavity surface 4S1 after the vulcanization molding is formed with a plurality of low projecting stripes 40 having vent grooves. The projecting stripes 40 extend between the bead portions 2a and 2a. These projecting stripes 40 adversely affect and deteriorate the adhering strength. Thus, if the adhering region (Y) is formed into the smooth surface from which the projecting stripes 40 are removed, the adhering area of the tire-side noise suppressing body 10 is increased, and the adhering strength can be enhanced. The projecting stripes 40 can be removed by removing the vent grooves of the bladder at a position corresponding to the adhering region Y.

Here, the bladder comes into contact with the tire 2 from the tire equator (C) toward a tread shoulder at the time of vulcanization molding. Thus, the venting effect of the vent grooves is extremely small in the tread region (J) on the side of the tire equator, especially in a center region (Jc) having a width of 100 mm having the tire equator (C) as the center. Therefore, if the vent grooves are removed from the center region (Jc) and the adhering region (Y) is formed into the smooth surface, the venting effect is not deteriorated so much, and the adhering strength can be enhanced.

In order to enhance the adhering strength, it is preferable that the adhering region (Y) is provided in a low butyl-mixed region of the inner liner rubber. More specifically, the inner liner rubber is made of high butyl-mixed rubber in which 50 parts by weight or more butyl-based rubber having low air-permeability is mixed in 100 parts by weight rubber base material. However, since the butyl-based rubber has inferior adhesive, the adhering strength with respect to the noise suppressing body 10 is deteriorated. Thereupon, the inner liner rubber is formed of high butyl-mixed rubber comprising high butyl-mixed rubber having a high mixing amount of butyl-based rubber as high as 50 parts by weight or higher, and a low butyl-mixed region comprising low butyl-mixed region having a lower mixing amount of butyl-based rubber. By providing the low butyl-mixed rubber with this adhering region (Y), the adhering strength with respect to the noise suppressing body 10 can be enhanced. The butyl-based rubber means butyl rubber halide which is butyl rubber and its derivative. In the low butyl-mixed rubber, the mixing amount of the butyl-based rubber may be 0 parts by weight.

Here, the tread region (J) of the tire 2 is thicker than other region and thus, the air-leakage preventing effect by the inner liner rubber is extremely small. Thus, if low butyl-mixed region is provided in the tread region (J) to form the adhering region (Y), the adhering strength can be enhanced while securing the air-leakage preventing effect.

When the tire-side noise suppressing body 10 is adhered to the tire cavity surface 4S1, a double-faces tape 41 can be used as the adhesive 9 instead of the liquid adhesive. It is difficult to handle the liquid adhesive and it takes time and labor to apply the liquid adhesive to the tire cavity surface 4S1 and thus, the operation efficiency thereof is inferior. Thus, it is preferable to use the double-faces tape 41 from such a viewpoint.

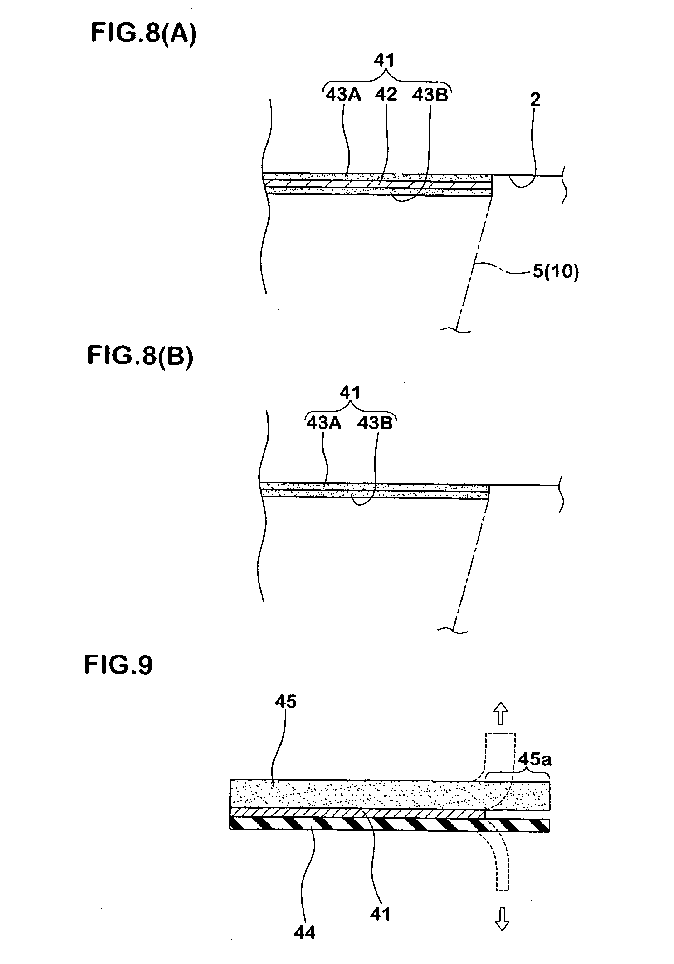

The double-faces tape 41 may be made of soft sheet base material 42 provided with adhesion layers 43A and 43B respectively on one surface and the other surface as shown in Fig. 8(A), or may be formed with only adhesion layers 43A and 43B without having the base material 42. Examples of the base material 42 are woven fabric, nonwoven fabric, cotton, plastic film such as polyester, and plastic foaming (blistered) material sheet such as acrylic foam. Examples of the adhesion layers 43A and 43B are a rubber-based adhesion material in which known addition agent such astackifier, softener, or antioxidant is mixed into natural rubber or synthetic rubber; acrylic adhesion material (including heat resistant adhesion material, flame retardant adhesion material, low-temperature-adhesion type adhesion material) in which a plurality of acrylic esters, each of which being different in its glass transition temperature, and other functional monomer are copolymerized; silicone-based adhesion material including silicone rubber and resin; and polyether-based or polyurethane-based adhesive. A thermosetting adhesion material using thermosetting resin such as epoxy resin needs to be heated (e.g., 130° for 30 minutes) at the time of adhesion, but the operation time is short and operation can be carried out efficiently as compared with the liquid adhesive, the thermosetting adhesion material can be employed. In the double-faces tape 41, the adhesion layer 43A may be rubber-based adhesion material having excellent adhesion with respect to the tire 2, and the adhesion layer 43B may be acrylic adhesion material having excellent adhesion with respect to the noise suppressing body 10. That is, the adhesion layers may be formed of different adhesion materials.

The internal temperature of the tire 2 is increased to about 120° at the time of high speed running. Therefore, the adhering strength of the double-faces tape 41 must be sufficiently be secured not only during the normal time but also during the high temperature time. In the later-described peel test, it is preferable that peel strength at 25°C (normal temperature) is 0.147 N/mm (0.015 kgf/mm) or higher, and the peel strength at 125°C (high temperature) is 0.0588 N/mm (0.006 kgf/mm) or higher.

As shown in Fig. 9, in the peel test, a sponge sheet 45 having the same component as that of the noise suppressing body 10 is adhered to a rubber sheet 44 having the same component as that of the rubber through a double-faces tape 41. The sponge sheet 45 is of rectangular shape having a width of 20 mm, a length of 120 mm and a thickness of 10 mm. The sponge sheet 45 is provided at its one longitudinal end with a non-contact portion 45a having a length of 20 mm. The non-contact portion 45a is pulled in opposite sides using a tension testing machine, and a value obtained by dividing a tensility (N) when peel is generated by the width 20 mm is defined as a peel strength.

The tire 2 is used at a low temperature lower than subfreezing temperature in some cases. Thus, it is preferable that the double-faces tape 41 maintains softness even at -35°C. Therefore, even if the test sample is bent five times at 90 degrees in opposite directions at -35°C, it is preferable that the double-faces tape 41 is not cracked at the bent portion.

As shown in Fig. 5, in the tire meridional cross section including a tire axis, a center of gravity (G) of the surface area of the tire-side noise suppressing body 10 is located in a range (Q) from an intermediate point T/2 of the maximum height (T) from the road noise which is the bottom surface 10B to the tip end 10A to the reference surface (N). Preferably, the tire-side noise suppressing body 10 is located closer to the reference surface (N) than the intermediate point T/2.

The maximum height (T) is a height in a direction perpendicular to the reference surface (N) at right angles from the reference surface (N) to the tip end 10A. The tire-side noise suppressing body 10 has substantially the same cross sectional shape and extends in the tire circumferential direction. When normal internal pressure is charged, the tire cavity surface 4S1 is curved in an arc shape even in the tread region (J), i.e. , the bottom surface 10B is also curved in an arc shape. In such a case, a straight line passing through opposite ends of the bottom surface 10B is the reference surface N, and this reference surface (N) has a height in the direction perpendicular to the reference surface (N) is the maximum height (T). A width of the bottom surface 10B along the reference surface (N) is (b), and a width of the tip end 10A is (a).

As results of various experiments carried out by the present inventors, although the tire-side noise suppressing body 10 is adhered, the body 10 receives a falling down force at the time of high speed running depending upon the shape of the body 10 when it is fixed, and the adhered portion may be peeled off in some cases. In this regard, if the a center of gravity (G) of the tire-side noise suppressing body 10 is set lower, the falling down or inclination action of the tire-side noise suppressing body 10 toward its width direction is reduced, the stability after the body 10 is fixed to the tire cavity surface 4S1 is enhanced, and the peeling-off force against the adhered portion becomes extremely small. Therefore, the attitude of the tire-side noise suppressing body 10 after it is adhered can be maintained for the long term.

The resonance energy becomes the greatest at the center portion of the tire cavity 4. Thus, if the a center of gravity (G) of the tire-side noise suppressing body 10 is set lower and the maximum height (T) is made longer in the vertical direction than in the width (b) of the bottom surface 10B, the tip end 10A of the tire-side noise suppressing body 10 can face more center portion of the tire cavity 4, and the noise can be suppressed effectively.

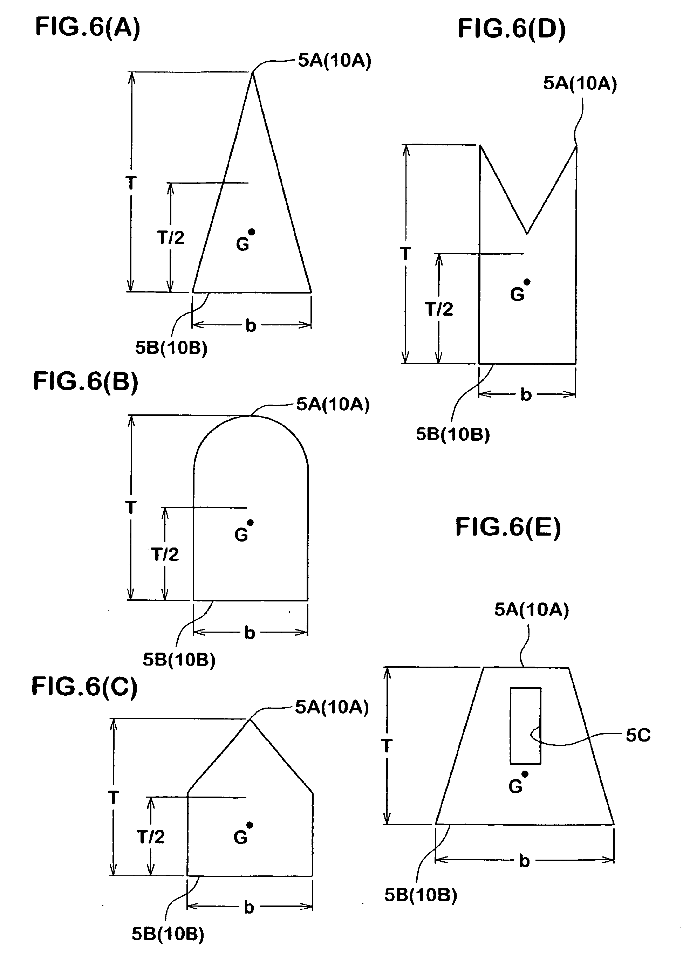

The tire meridional cross section of the tire-side noise suppressing body 10 is of trapezoidal shape in which a width thereof from the bottom surface 10B toward the tip end 10A is reduced. When this trapezoidal shape is employed, a ratio (a/b) of the width (b) of the bottom surface 10B of the tire-side noise suppressing body 10 to the width (a) of the tip end 10A is 0.3 to 0.8, more preferably 0.4 to 0.7. As results of various experiments, if the ratio (a/b) is less than 0.3, the tapered degree of the tire-side noise suppressing body 10 becomes excessively large, the resonance reducing effect is relatively reduced, and if the ratio (a/b) exceeds 0.8 on the contrary, although the reducing effect of resonance is high, the body is prone to fall down at the time of high speed running. It is preferable that the maximum height (T) is 0.8 to 3 times of the width (b) of the bottom surface 10B, preferably 1.0 to 3 times, more preferably 1.2 to 3 times, and more preferably 1.2 to 2.5 times. As shown in Fig. 6 (E), the tire-side noise suppressing body 10 may be provided therein with a hollow 10C which is different from bubble. Since the hollow 10C substantially increases a surface area of the tire-side noise suppressing body 10, it is possible to reduce the road noise while suppressing the weight increase.

Figs. 6 show another shape of the tire-side noise suppressing body 10. Fig. 6(A) shows a triangular tire-side noise suppressing body 10 whose width in the tire axial direction is reduced from the bottom surface 10B toward the tip end 10A. Fig. 6(B) shows a nose-like tire-side noise suppressing body 10 provided at its tip end 10A side with a semi-circular portion whose width in the tire axial direction from the bottom surface 10B toward the tip end 10A. Fig. 6(C) shows a home base-like tire-side noise suppressing body 10 provided at its tip end 10A with a triangular portion whose width in the tire axial direction is reduced from the bottom surface 10B toward the tip end 10A. Fig. 6(D) shows a tire-side noise suppressing body 10 whose tip end 10A is notched in substantially V-shaped manner. In any of these examples, the cross section is longer in the vertical direction, and center of gravity (G) of the surface area thereof is located closer to the bottom surface 10B than the intermediate point T/2. It is especially preferable that a height of the center of gravity (G) from the reference surface (N) is 0.45T or less in terms of stability.

As shown in Fig. 5, in the assembly 1, it is preferable that the tire cavity 4 into which normal internal pressure is charged and no load is applied thereto in the tire meridional cross section is virtually divided into a first tire cavity region AR1, a second tire cavity region AR2, a third tire cavity region AR3 and a fourth tire cavity region AR4, and an area ratio of the tire-side noise suppressing body 10 belonging to each region is defined.

When a tire radial height between the bead base line (BL) and a tire cavity equator point (IP) where the tire-side cavity surface 4S1 and tire equator surface (CP) intersect with each other is defined as a tire cavity height (Hi), the first tire cavity region AR1 comprises a region a1 located radially inner side of the tire than a 10% height h1 separated away in radially outward from the bead base line (BL) by 10% of the tire cavity height (Hi), and a region a2 located radially outer side of the tire than a 90% height 9 separated away in the radially outward by 90% of the tire cavity height (Hi).

The second tire cavity region AR2 comprises a region a3 located outer side from the 10% height h1 and located radially inner side of the tire than a 20% height h2 separated away by 20% of the tire cavity height (Hi) from the bead base line (BL), and a region a4 located inner outer side than 80% separated away from the bead base line (BL) by 80% of the tire cavity height (Hi) and located radially inner side of the tire from the 90% height.

The third tire cavity region AR3 comprises a region a5 located outer side from the 20% height h2 and located radially inward of the tire than 30% height h3 separated away from the bead base line (BL) by 30% of the tire cavity height (Hi), and a region a6 located outer side than 70% height h7 separated away by 70% of the tire cavity height (Hi) and located radially inward of the tire from the 80% height.

The fourth tire cavity region AR4 is a region located outer side from the 30% height h3 and inner side from the 70% height h7.

Areas of the tire-side noise suppressing body 10 included in the first to fourth tire cavity regions AR1 to AR4 are respectively defined as s1, s2, s3 and s4. Area ratios obtained by dividing these areas s1, s2, s3 and s4 by the tire cavity area A are respectively defined as S1(=s1/A), S2(=s2/A), S3(=s3/A) and S4(=s4/A). It is preferable that the shape coefficient (E) expressed in the following equation 1) is 2 or more.

$$E = 1.27 + 31.3 \times S1 + 47.3 \times S2 + 75.0 \times S3 + 121.4 \times S4 \dots 1)$$

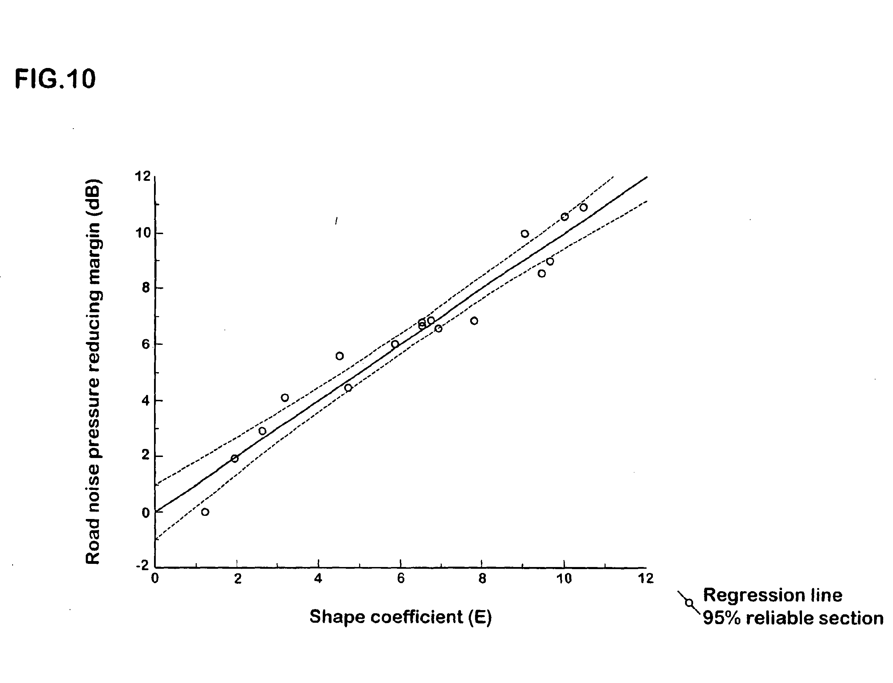

The present inventors virtually divided the tire cavity 4 and carries out tests while variously changing the cross section shape of the tire-side noise suppressing body 10. Fig. 10 shows a graph in which a vertical axis shows a reduction margin (dB) of road noise, and a lateral axis shows the shape coefficient (E) expressed in the equation 1). As is apparent from Fig. 10, there is a correlation between the shape coefficient (E) and the reduction margin of the road noise. It was found that in order to secure the reduction margin of resonance of 2 (dB) or higher, the shape coefficient (E) was preferably set to 2 or higher. In order to reduce the road noise, it is possible to set the shape coefficient (E) to 4 or higher or 6 or higher.

The equation 1) expressing this shape coefficient (E) is obtained by prototyping tire-side noise suppressing bodies 10 whose area ratios S1 to S4 were variously varied and carrying out a road noise test, and by subjecting a result of the test to multi-regression analysis. As the shape coefficient (E) becomes greater, the road noise reducing effect becomes great, but since the increase of the shape coefficient also increases the tire-side noise suppressing body 10 in size and thus, the shape coefficient (E) should be set to 10 or lower, preferably 7 or lower. It is preferable that the area ratios S1 to S4 in the first to fourth tire cavity regions AR1 to AR4 are greater than 0. That is, it is preferable that the tire- side noise suppressing body 10 has shape and size which belong to any of the first to fourth tire cavity regions AR1 to AR4.

As shown in Figs. 2 and 3, the tire-side noise suppressing body 10 may be one band-like body 12 which continuously extends in the tire circumferential direction. At that time, it is preferable that one end (e) and the other end of the band-like body 12 in the tire circumferential direction are separated from each other by a distance (g) of 10 to 300 mm, more preferably 20 to 150 mm in the circumferential direction as shown in Fig. 2, or the one end (e) and the other end (e) thereof in the tire circumferential direction are integrally connected to each other by adhesive.

This is because that if the one end (e) and the other end (e) are not adhered to each other and brought closer to each other, friction is generated between the one end (e) and the other end (e) by the deformation of the noise suppressing body 10 caused when the vehicle runs, and wearing powder is generated. When the air valve is clogged with the wearing powder, air may leak. Thus, the one end (e) and the other end (e) are connected to each other, or, in the case where these ends are separated a gap (g) of not less than 10 mm is provided therebetween, in order to suppress the generation of the wearing powder. If the gap (g) exceeds 300 mm, the balance of weight of the assembly 1 is lost and this may vibrate the vehicle. Thus, it is also preferable that the gap (g) is set to the above range and the unbalance weight in the separated portion is limited to 15 g or less. The unbalance weight is a weight capable of keeping the weight around the axle in balance when the weight is fixed to the upper end of the flange 3a1.

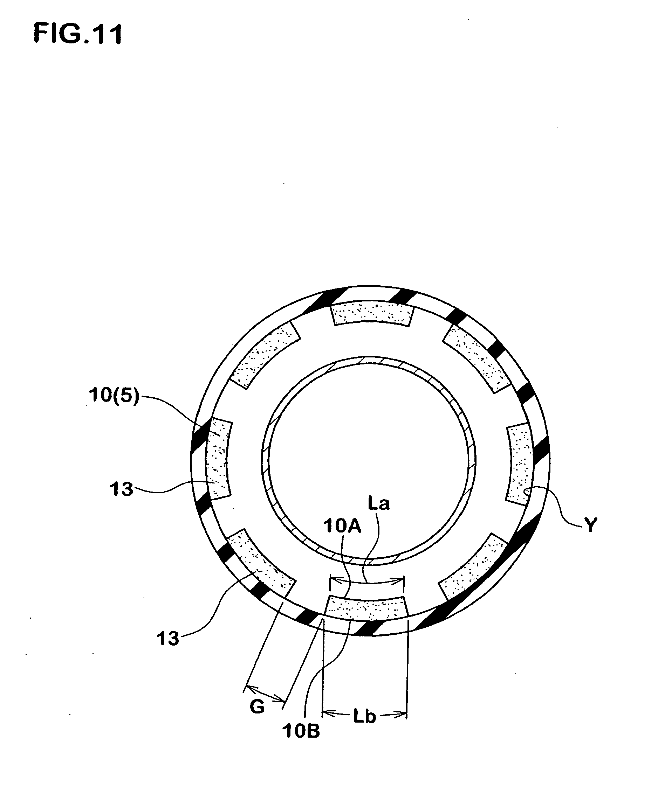

The tire-side noise suppressing body 10 may not be formed of the one band-like body 12. Alternatively, the tire-side noise suppressing body 10 may comprise a plurality of block pieces 13 arranged in the tire circumferential direction at equal distances from one another as shown in Fig. 11.

Here, a sponge is an excellent noise suppressing material, while comprising high heat-insulative performance. Thus, the tire-side noise suppressing body 10 may accumulate heat generated by the tire at the time of running and increase the temperature of the tire, and may adversely deteriorate the high speed endurance of the tire. Thus, by dividing the tire-side noise suppressing body 10 into the plurality of block pieces 13, the heat accumulating effect of the tire-side noise suppressing body 10 can be reduced, and the reduction of the high speed endurance can be suppressed. For this reason, it is preferable to set the length (Lb) of the bottom surface 10B of each block piece 13 to set to 150 mm or less, more preferably 100 mm or less, and more preferably 80 mm or less. The number of blocks is not especially limited, but in view of operation efficiency, it is preferable that the number of blocks is 20 or less, preferably 10 or less, and more preferably 6 or less, and in terms of uniformity, 3 or less is more preferable.

It is preferable that a gap (gp) between the block pieces 13 in the tire circumferential direction is 10 mm or more, more preferably 20 mm or more so that the block pieces 13 do not rub with each other and wearing powder is not generated. If the gaps (gp) are equal to each other, the weight unbalance of the assembly 1 is not deteriorated, and its upper limit is not especially limited.

It is found that although the shape and size of the tire meridional cross section of the noise suppressing body 5 largely affect the noise suppressing effect, the length thereof in the circumferential direction of the tire does not affect the noise suppressing effect so much. Thus, even if a total sum ΣLb of the lengths (Lb) of the block pieces 13 in the tire circumferential direction is set to 1/2 or less of a length of one circuit of the adhering region (Y), or 1/3 or less, or 1/4 or less, necessary road noise reducing effect can be exhibited.

Here, like the case of the band-like body 12, the shape of the tire meridional cross section of the block piece 13 is set such that the center of gravity (G) of the surface area thereof is in a range (Q) from at least the maximum height of the intermediate point T/2 to the reference surface (N), preferably at a location closer to the reference surface (N) than the intermediate point T/2.

However, with the block pieces 13, it is also necessary to prevent the tire-side noise suppressing body 10 from falling down against the tire circumferential direction. Thus, it is preferable to set the length (Lb) of the block piece 13 in the tire circumferential direction to a value equal to or greater than the maximum height (T). For the same purpose, it is preferable to form the tire-side noise suppressing body 10 into the trapezoidal shape in which a length (La) of the tip end 10A of the block piece 13 in the tire circumferential direction is smaller than the length (Lb) of the bottom surface 10B in the tire circumferential direction.

It is preferable that the width (b) of the bottom surface 10B of the block piece 13 in the tire meridional cross section is greater than the length (Lb) of the bottom surface 10B in the tire circumferential direction. With this configuration, the road noise reducing effect can effectively be exhibited in the limited volume V2.

Next, a second embodiment in which the noise suppressing body 5 is a rim-side noise suppressing body 11 will be explained.

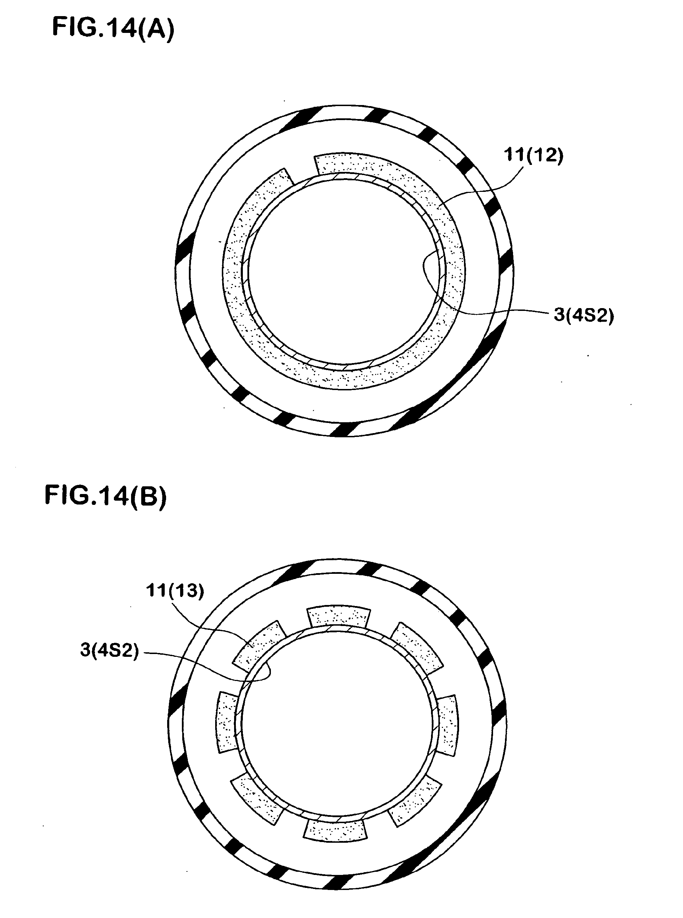

Like the case of the tire-side noise suppressing body 10, it is preferable that the rim-side noise suppressing body 11 is fixed to the rim-side cavity surface 4S2 by adhesive 9. Liquid adhesive and the double-faces tape 41 can be used for adhering the rim-side noise suppressing body 11 to the rim-side cavity surface 4S2. Especially the double-faces tape 41 can be employed preferably because the adhering operation can be enhanced and the operation time can be shortened. The rim-side noise suppressing body 11 is formed on one band-like body 12 which continuously extends in the tire circumferential direction as shown in Fig. 14(A), or formed of a plurality of block pieces 13 arranged in the tire circumferential direction at gaps (gp) from one another.

The rim-side noise suppressing body 11 is substantially the same as the tire-side noise suppressing body 10 except in that the bottom surface 11B of the rim-side noise suppressing body 11 is fixed to the rim-side cavity surface 4S2, and the tire meridional cross section is different from that of the tire-side noise suppressing body 10. Thus, the cross section shape which is different from that of the tire-side noise suppressing body 10 will mainly be explained below.

As shown in Fig. 12, the rim-side noise suppressing body 11 comprises a base portion 15 extending from the bottom surface 11B fixed to a well portion 3a2 of the rim 3 to the bead base line (BL), and a noise suppressing body main portion 16 which is integrally connected to the reference surface (N) which is an upper surface of the base portion 15 and extends radially outward.

The base portion 15 is a base which connects the noise suppressing body main portion 16 and the well portion 3a2. In this embodiment, the base portion 15 has a constant width extending radially outward from the bottom surface 11B along the well portion 3a2 and stands upright. Especially in this embodiment, there is shown a preferable one in which a width (c) of the base portion 15 in the tire axial direction is substantially equal to a width (b) of the noise suppressing body main portion 16 in the reference surface (N).

Like the case of the tire-side noise suppressing body 10, the center of gravity (G) of the surface area in the tire meridional cross section of the noise suppressing body main portion 16 is located in a range (Q) from the intermediate point T/2 of the maximum height (T) from the reference surface (N) to the tip end 11A to the reference surface (N). Preferably, the center of gravity (G) of the surface area is located closer to the reference surface (N) than the intermediate point T/2.

Like the case of the tire-side noise suppressing body 10, the attitude of the rim-side noise suppressing body 11 is stabilized and is prevented from falling down in the widthwise direction (tire axial direction), and it is possible to prevent the noise suppressing body 11 from being damaged or destroyed.

Thus, like the case of the tire-side noise suppressing body 10, it is preferable that the rim-side noise suppressing body 11 is formed into a trapezoidal shape, triangular shape or nose-like shape in which the width thereof in the tire meridional cross section is reduced toward the tip end. At that time, it is preferable that the rim-side noise suppressing body 11 is symmetric with respect to the tire equator (C). It is preferable that the rim-side noise suppressing body 11 is of the trapezoidal shape in which the maximum height (T) is greater than the width (b) of the reference surface, and a ratio (a/b) between the width (b) and the width (a) of the tip end is 0.3 to 0.8. The rim-side noise suppressing body 11 may be provided therein with a hollow which is different from bubble.

In the second embodiment, a centrifugal force at the time of running is applied in a direction pulling the rim-side noise suppressing body 11 radially outward, i.e., in a direction correcting the falling-down of the rim-side noise suppressing body 11. Thus, the falling-down suppressing effect of the rim-side noise suppressing body 11 by positional limitation of the center of gravity (G) of the surface area is exhibited when the vehicle runs at low speed. The positional limitation of the center of gravity (G) of the surface area exhibits adhesive-peeling off preventing effect and tensile rupture preventing effect of the rim-side noise suppressing body 11 caused by pulling action.

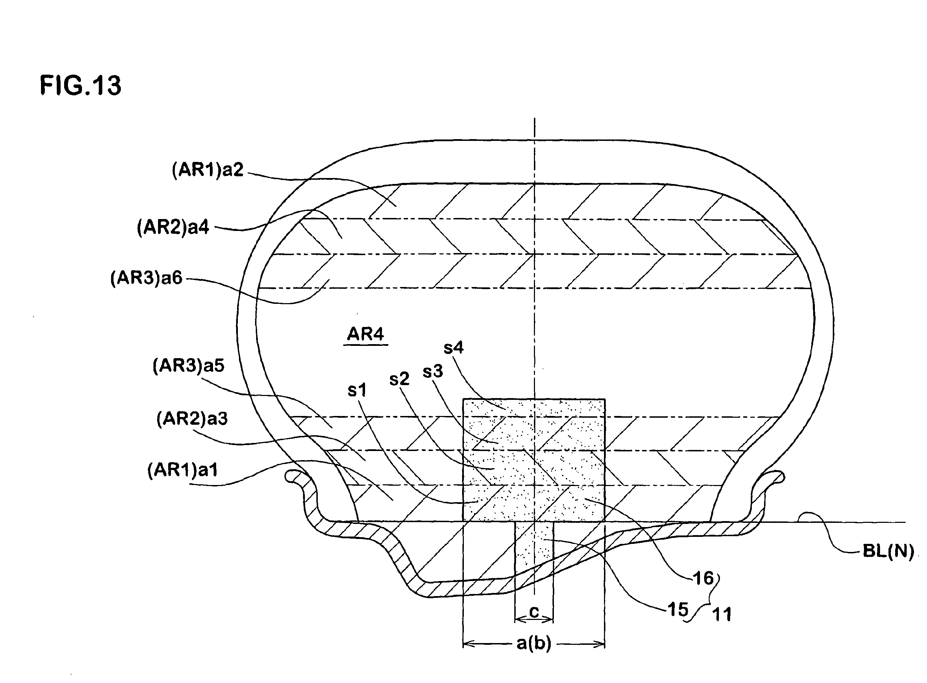

From such a viewpoint, if the adhering strength and the tensile rupture strength are sufficiently secured, as shown in Fig.13 for example, the noise suppressing body main portion 16 may be formed into a thin columnar shape in which the noise suppressing body main portion 16 is rectangular in cross section, and the width (c) of the base portion 15 is smaller than the width (b) of the noise suppressing body main portion 16.

In order to exhibit more excellent road noise reducing effect in the rim-side noise suppressing body 11, like the case of the tire-side noise suppressing body 10, the lower limit value of the shape coefficient (E) is preferably set to 2 or higher, 4 or higher, or 6 or higher, and the upper limit is preferably set to 10 or less, or 7 or less. At that time, it is preferable that the rim-side noise suppressing body 11 has shape and size which belong any of the first to fourth tire cavity regions AR1 to AR4.

Next, in order to form the assembly 1 efficiently, it is preferable that in the noise suppressing body 5, the adhesive 9 coated with peel-paper is previously attached to a bottom surface 5B. The liquid adhesive, the double-faces tape 41 and the like can preferably be used as the adhesive 9. The noise suppressing body 5 may be formed into an annular body which surrounds the adhering region (Y) of the tire cavity surface 4S in the tire circumferential direction in accordance with the long band-like body 12, the short block piece 13 or the tire size.

Next, when the assembly 1 is provided, in a shipping stage in a factory or the like, the noise suppressing body 5 may be previously adhered to the tire 2 , and when the tire 2 is mounted to the vehicle, the tire 2 with the noise suppressing body may be assembled to the rim.

If moisture remains in the tire cavity 4 of the assembly 1, the moisture may enter the rubber of the tire and damage the inside the tire. Thus, it is necessary to remove the moisture by wiping the moisture off from the tire cavity surface 4S1 of the tire 2 having the noise suppressing body before the tire is assembled to the rim. However, the noise suppressing body 5 made of sponge material has high water absorption performance. Thus, there is a new problem that while the noise suppressing body 5 is stored, it gets wet by rain etc. and adsorbs water, and water can not be removed sufficiently.

When the tire 2 having the noise suppressing body is stored, it is necessary to cover the noise suppressing body 5 with a waterproofing protecting member 20 to protect the same.

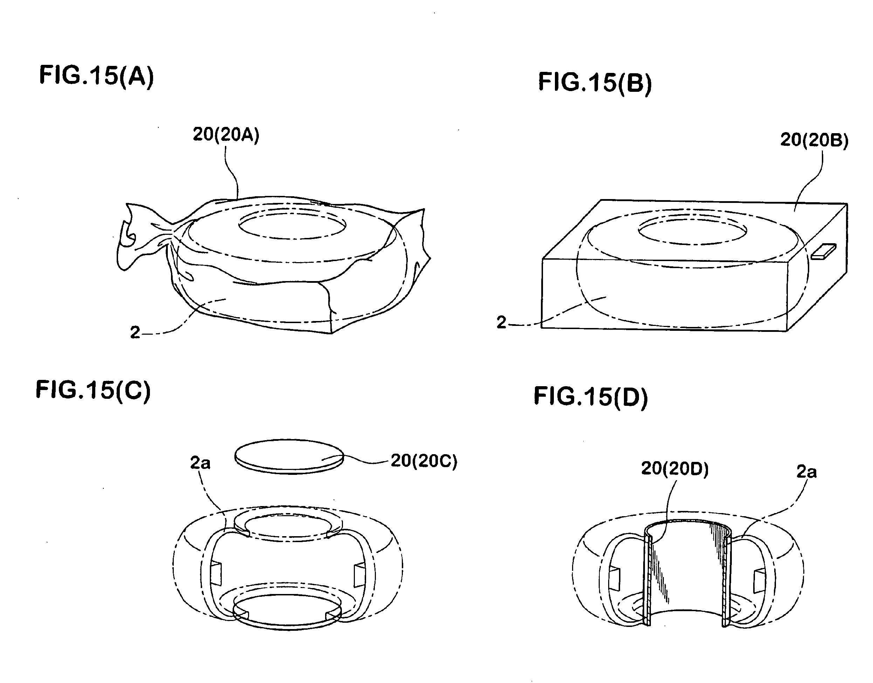

At that time, a bag body 20A which covers and protect the entire 2 having the noise suppressing body can be used as the protecting member 20 as shown in Fig. 15(A). Alternatively, a rectangular or cylindrical box-like body 20B for accommodating the entire 2 having the noise suppressing body may be used as the protecting member 20 as shown in Fig. 15 (B). Alternatively, a disk-like body 20C which covers and closes the periphery of each the bead portion 2a of the tire 2 having the noise suppressing body may be used as the protecting member 20 as shown in Fig. 15(C). Alternatively, a cylindrical body 20D for closing the space between the bead portions 2a and 2a of the tire 2 having the noise suppressing body may be used as the protecting member 20 as shown in Fig. 15(D).

Examples of materials suitable for the protecting member 20, especially for the bag body 20A are synthetic resin sheet such as polyethylene, polyvinylidene chloride, polypropylene, nylon, and laminated sheets such as polylaminate paper, polysand paper, film, and aluminum foil paste paper.

Examples of materials suitable for the box-like body 20B are synthetic resin plate such as coated corrugated paper, ABS resin or acrylonitrile butadiene styrene resin, polypropylene, high density polyethylene, and low density polyethylene.

Examples of materials suitable for the disk-like body 20C and the cylindrical body 20D are synthetic resin sheet, laminated sheet, corrugated paper, and synthetic resin plate.

Examples of materials suitable for the bag body 20A are contraction films such as styrene contraction film, PET contraction film, vinyl chloride contraction film, PP contraction film, olefin-based contraction film. In such a case, since the entire 2 having the noise suppressing body can be tightly closed, this is more preferable.

Some sponge materials such as urethane-based sponge are degenerated by ultraviolet radiation. Thus, it is preferable that ultraviolet radiation non-permeable material is used for the protecting member 20. For this purpose, the following conditions can appropriately be employed:

- ultraviolet radiation sorbent is included in the sponge;
- the sponge is colored with dense or strong color;
- the sponge is aluminum-evaporated;
- an aluminum-evaporated film is adhered to the sponge;
- the thickness of the sponge is increased to such a degree that ultraviolet radiation can sufficiently be cut off.

Although the preferred example of the present invention has been described in detail, the invention is not limited to the illustrated example, and the various changes and modifications may be made in the invention.

Embodiments

(Test A)

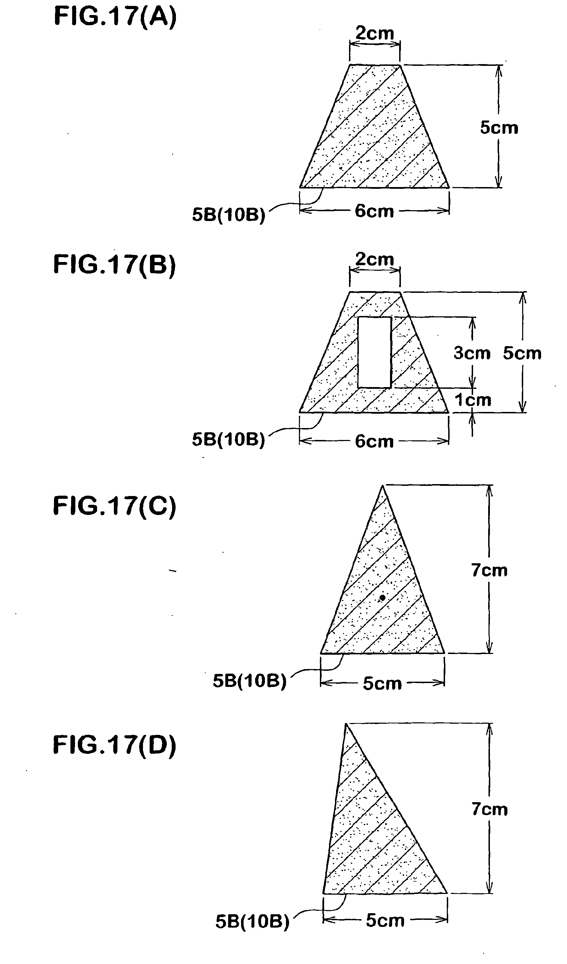

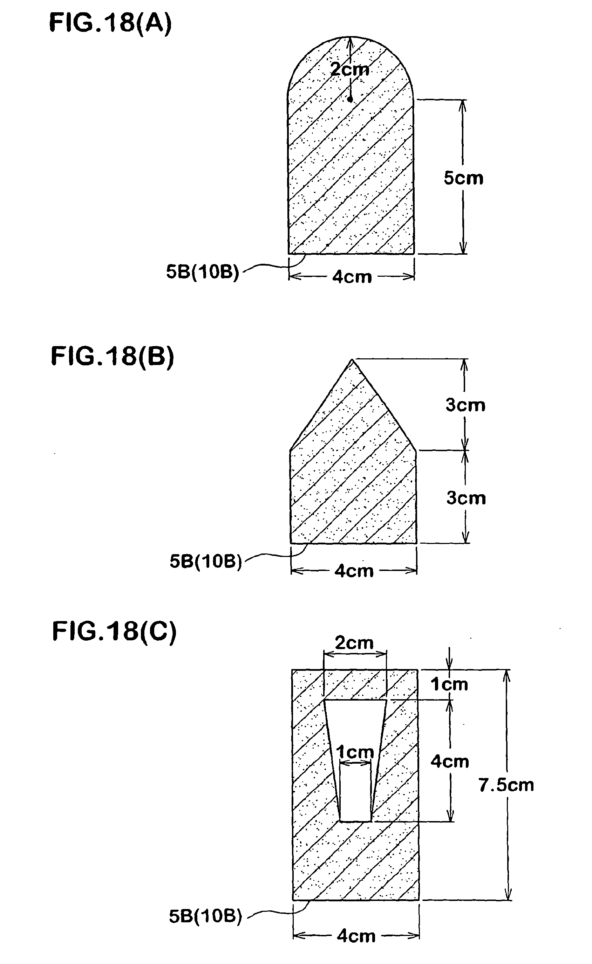

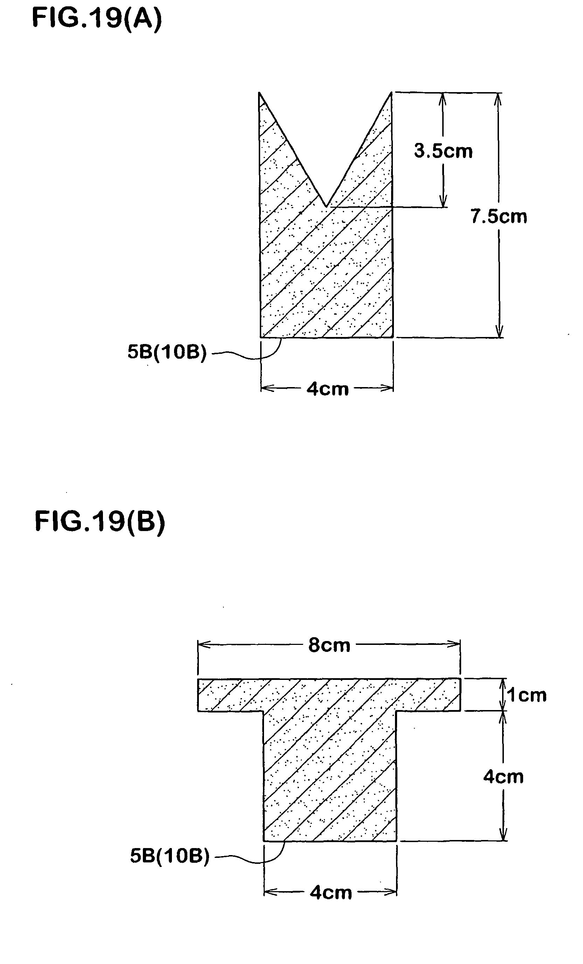

Based on the specifications shown in Table 1, assemblies each including a rim (16 × 6.5JJ) and a tire (215/60R16) having a noise suppressing body comprising one band-like body were prototyped, and road noise performance, high speed endurance of the noise suppressing body and the like were tested. For the noise suppressing body, polyurethane sponge (open-cell) having specific gravity of 0.02 was employed, the sponge was fixed to a tire-side inner hole surface or onto a tire equator of a rim-side inner hole surface, and the test was carried out. Contents of the test are described below. Each noise suppressing body (band-like body) has a length (L) of 1830 mm in the tire circumferential direction. Shapes of meridional cross sections of the noise suppressing bodies are shown in Figs. 17 to 20.

(1) Road noise performance

The tires were mounted on all rims of a vehicle (Japanese FF vehicle, piston displacement of 2300 cc) under internal pressure of 230 kPa, and the vehicle was allowed to run on a road noise measuring road (asphalt rough road) at a speed of 60 km/h. Only one person was in the vehicle. A noise at a front seat at that time was measured, and a sound pressure level of a peak value of air-column resonance sound around 245Hz is evaluated using increase/decrease value (dB(A)) in which a conventional example (no noise suppressing body) is defined as a reference. Here, a symbol "-" (minus) means the reduction in road noise.

(2) High speed endurance of noise suppressing body

The tire was allowed to run on a drum at a speed of 200 km/h for 5 minutes under an internal pressure of 230 kPa and load of 4.0 kN, and coming out of the noise suppressing body inside the tire and the falling-down thereof were checked. The test was carried out five times, and the number of falling-down phenomena of the noise suppressing body was measured. Here, "0/5" means that the number of falling-down phenomena of the noise suppressing body is 0.

Table 1-1

| | Conventional example | Embodiment A1 | Embodiment A2 | Embodiment A3 | Embodiment A4 | Embodiment A5 | Embodiment A6 | Embodiment A7 |
|---|---|---|---|---|---|---|---|---|
| Adhesion side | - | Tire | Tire | Tire | Tire | Tire | Tire | Tire |
| Meridional cross section shape of noise suppressing body (main portion) | - | Fig. 16 (A) | Fig. 16 (B) | Fig. 16 (C) | Fig. 16 (D) | Fig. 16 (E) | Fig. 16 (F) | Fig. 16 (G) |
| Meridional cross section size (cm) of noise suppressing body (main portion) | Absent | a, b = 5 $T = 1$ (Laterally long) | a, b = 10 $T = 1$ (Laterally long) | a, b = 10 $T = 2$ (Laterally long) | a, b = 4 $T = 2.5$ (Laterally long) | a, b = 2 $T = 5$ (Vertically long) | a, b = 4 $T = 5$ (Vertically long) | a, b = 2 $T = 10$ (Vertically long) |
| Volume ratio (V2/V1) (%) | 0 | 2.3 | 4.5 | 9.0 | 4.5 | 4.5 | 9.0 | 9.0 |
| Height of area barycenter from reference surface Tg | - | 0.5T | 0.5T | 0.5T | 0.5T | 0.5T | 0.5T | 0.5T |
| Value of shape coefficient E | 1.3 | 2.0 | 2.7 | 4.7 | 3.2 | 4.5 | 7.8 | 9.0 |
| Area ratio S1 (= s1/A) | 0 | 0.023 | 0.045 | 0.052 | 0.021 | 0.010 | 0.021 | 0.010 |
| Area ratio S2 (= s2/A) | 0 | 0 | 0 | 0.038 | 0.021 | 0.010 | 0.021 | 0.017 |
| Area ratio S3 (= s3/A) | 0 | 0 | 0 | 0 | 0.003 | 0.010 | 0.021 | 0.021 |
| Area ratio S4 (= s4/A) | 0 | 0 | 0 | 0 | 0 | 0.014 | 0.027 | 0.042 |
| Result of test — Road noise performance (dB) | Reference | -1.9 | -2.9 | -4.4 | -4.1 | -5.6 | -6.8 | -10.0 |
| Result of test — High speed endurance of noise suppressing body | - | 0/5 | 0/5 | 0/5 | 0/5 | 5/5 | 5/5 | 5/5 |

Table 1-2

| | Embodiment A8 | Embodiment A9 | Embodiment A10 | Embodiment A11 | Embodiment A12 | Embodiment A13 | Embodiment A14 | Embodiment A15 | Comparative example A1 | Embodiment A16 | Embodiment A17 |
|---|---|---|---|---|---|---|---|---|---|---|---|
| Adhesion side | Tire | Tire | Tire | Tire | Tire | Tire | Tire | Tire | Tire | Rim | Rim |
| Meridional cross section shape of noise suppressing body (main portion) | Fig. 17 (A) | Fig. 17 (B) | Fig. 17 (C) | Fig. 17 (D) | Fig. 18 (A) | Fig. 18 (B) | Fig. 18 (C) | Fig. 19 (A) | Fig. 19 (B) | Fig. 12 | Fig. 13 |
| Meridional cross section size (cm) of noise suppressing body (main portion) | a = 2 b = 6 T = 5 (Vertically long trapezoidal shape) | a = 2 b = 6 T = 5 (With hole vertically long trapezoidal shape) | a = 0 b = 5 T = 7 (Vertically long triangular shape) | a = 0 b = 5 T = 7 (Vertically long triangular shape) | a = 0 b = 4 T = 7 (Nose-like shape) | a = 0 b = 4 T = 6 (Home base shape) | a = 4 b = 4 T = 7.5 (With hole, vertically long shape) | a = 0 b = 4 T = 7.5 (Vertically long shape) | a = 8 b = 4 T = 5 (T-shape) | a = 2 b = 6 T = 5 (Trapezoidal shape) | a = 6 b = 6 T = 5 (Rectangular shape) |
| Width C of base portion | · | · | · | · | · | · | · | · | · | c = 6 | c = 1.5 |
| Volume ratio (V2/V1) (%) | 9.0 | 7.6 | 7.9 | 7.9 | 11.2 | 8.1 | 10.5 | 10.4 | 10.8 | 13.0 | 10.9 |
| Height of area barycenter from reference surface Tg | 0.42T | 0.35T | 0.33T | 0.33T | 0.45T | 0.36T | 0.33T | 0.37T | 0.61T | 0.42T | 0.5T |
| Value of shape coefficient E | 6.9 | 5.9 | 6.5 | 6.5 | 10.5 | 6.8 | 9.7 | 9.5 | 10.0 | 8.2 | 8.4 |
| Area ratio S1 (= s1/A) | 0.029 | 0.028 | 0.024 | 0.024 | 0.021 | 0.021 | 0.021 | 0.021 | 0.021 | 0.074 | 0.040 |
| Area ratio S2 (= s2/A) | 0.024 | 0.019 | 0.020 | 0.020 | 0.021 | 0.021 | 0.021 | 0.021 | 0.021 | 0.024 | 0.021 |
| Area ratio S3 (= s3/A) | 0.019 | 0.014 | 0.015 | 0.015 | 0.021 | 0.020 | 0.019 | 0.021 | 0.021 | 0.019 | 0.021 |
| Area ratio S4 (= s4/A) | 0.018 | 0.015 | 0.020 | 0.020 | 0.049 | 0.019 | 0.044 | 0.041 | 0.045 | 0.018 | 0.027 |
| Result of test — Road noise performance (dB) | -6.5 | -6.0 | -6.8 | -6.7 | -10.8 | -6.9 | -10.5 | -10.3 | -10.6 | -7.8 | -8.1 |
| Result of test — High speed endurance of noise suppressing body | 0/5 | 0/5 | 0/5 | 5/5 | 0/5 | 0/5 | 5/5 | 0/5 | 5/5 | 0/5 | 5/5 |

As a result of the test, it can be confirmed that as the meridional cross section shape of the noise suppressing body becomes vertically longer and the shape coefficient (E) is increased, the road noise performance is enhanced, but the stability is deteriorated, and the noise suppressing body is prone to fall down (high speed endurance of the noise suppressing body is deteriorated). It can be confirmed that if the height (Tg) from the center of gravity of the surface area is set lower than 0.5T, the falling-down can be suppressed while maintaining the road noise performance. It can be confirmed that when the noise suppressing body is asymmetric or has a rectangular shape, the stability is insufficient as compared with a case where the height (Tg) from the center of gravity of the surface area is low, and the falling-down suppressing effect is inferior.

(Test B)

Next, the meridional cross section shape of the tire-side noise suppressing body (band-like body) was limited to the trapezoidal shape, the ratio (a/b) of the width (b) of the bottom surface and the width (a) of the tip end was variously changed, and the same test was carried out. The length (L) of the noise suppressing body in the tire circumferential direction was fixed to 1830 mm, and the meridional cross section area was fixed to 2000 mm$^2$ (e.g., the volume V2 of the noise suppressing body was fixed to 3660000 mm$^3$, and the area ratio V2/V1 was fixed to 9.8%). A result of the test is shown in Table 2.

Table 2

| | Comparative example B1 | Embodiment B1 | Embodiment B2 | Embodiment B3 | Embodiment B4 |
|---|---|---|---|---|---|
| Width b of bottom surface (cm) | 4 | 5 | 5.5 | 6 | 7 |
| Width a of tip end (cm) | 4 | 3 | 2.5 | 2 | 1 |
| Ratio (a/b) | 1.0 | 0.6 | 0.45 | 0.33 | 0.14 |
| Height T (cm) | 5 | 5 | 5 | 5 | 5 |
| Road noise performance (dB) | Reference | +0.2 | +0.4 | +0.5 | +0.8 |

(continued)

|  | Comparative example B1 | Embodiment B1 | Embodiment B2 | Embodiment B3 | Embodiment B4 |
|---|---|---|---|---|---|
| High speed endurance of noise suppressing body | 5/5 | 0/5 | 0/5 | 0/5 | 0/5 |

As a result of the test, when the noise suppressing body is formed into the trapezoidal shape, it is found that the noise suppressing body whose ratio (a/b) of the width (b) of the bottom surface and the width (a) of the tip end is set to 0.3 to 0.6 can exhibit excellent high speed endurance while substantially maintaining the road noise radial direction.

(Test C)

Assemblies each comprising a tire (195/60R15) and a rim (15 × 6JJ) were prototyped based on the specifications shown in Table 3. Each tire has one band-like body or a plurality of block pieces. Then, the road noise performance, high speed endurance of the tire, the tire temperature and the like were tested. A polyurethane sponge (open-cell) having specific gravity of 0.02 was employed for the noise suppressing body, and the noise suppressing body was fixed to the tire equator of the tire-side inner hole surface and the test was carried out. The contents of the test are as follows:

(3) Road noise performance

The tires were mounted on all rims of a vehicle (Japanese FF vehicle, piston displacement of 2000 cc) under internal pressure of 200 kPa, and the vehicle was allowed to run on a road noise measuring road (asphalt rough road) at a speed of 60 km/h. Only one person was in the vehicle. A noise at a front seat at that time was measured, and a sound pressure level of a peak value of cavity resonance around 245Hz is evaluated using increase/decrease value (dB (A)) in which a conventional example (no noise suppressing body) is defined as a reference. Here, a symbol "-" (minus) means the reduction in road noise.

(4) High speed endurance

In accordance with ECE 30 standard, the tire was allowed to run on a drum in a step speed manner at speeds of from 200 km/h to 10 km/h for 20 minutes under an internal pressure of 280 kPa and load of 4.4 kN, and speed and time when the tire was destroyed were measured.

(5) Temperature in tire

The tire was allowed to run on a drum at 220 km/h under the same condition as that of the high speed endurance of the tire, and the temperature at a central portion of the tread at that time was measured.

Table 3

| | Conventional example | Embodiment C1 | Embodiment C2 | Embodiment C3 | Embodiment C4 | Embodiment C5 | Embodiment C6 | Embodiment C7 | Embodiment C8 |
|---|---|---|---|---|---|---|---|---|---|
| Noise suppressing body · Size of meridional cross section | Absent | Band-like body (trapezoidal shape) | Block piece (trapezoidal shape) | Block piece (trapezoidal shape) | Block piece (trapezoidal shape) | Block piece (trapezoidal shape) | Block piece (trapezoidal shape) | Block piece (trapezoidal shape) | Block piece (trapezoidal shape) |
| a (cm) | - | 3 | 3 | 3 | 3 | 6 | 10 | 6 | 4.5 |
| b (cm) | - | 5 | 5 | 5 | 5 | 10 | 10 | 8 | 6 |
| T (cm) | - | 5 | 5 | 5 | 5 | 5 | 5 | 5 | 5 |
| · Size of cross section in circumferential direction | | | | | | | | | |
| La (cm) | - | 168 | 6.0 | 6.0 | 4.5 | 3 | 3 | 3 | 3 |
| Lb (cm) | - | 168 | 10.0 | 10.0 | 6.0 | 5 | 5 | 5 | 5 |
| · The number | 0 | 1 | 4 | 8 | 16 | 4 | 4 | 8 | 16 |
| Volume ratio V2/V1 (%) | 0 | 12.7 | 2.4 | 4.8 | 6.4 | 2.4 | 3.0 | 4.8 | 6.4 |
| Tire cavity area | 0 | 11.5 | 11.5 | 11.5 | 11.5 | 22.9 | 28.6 | 22.9 | 15.0 |
| Road noise performance (dB) | Reference | -9.8 | -2.9 | -5.3 | -5.7 | -4.4 | -4.9 | -6.4 | -6.9 |
| Tire high speed endurance (km/h - minute) | 250-10 | 230-18 | 250-10 | 240-17 | 140-10 | 250-5 | 250-2 | 240-18 | 240-8 |
| Tire temperature (°C) | 134 | 160 | 134 | 147 | 150 | 136 | 140 | 145 | 151 |

As a result of the test, it is found that if the noise suppressing body comprises a plurality of block pieces, the tire temperature can be reduced without excessively reducing the road noise performance, and the tire high speed endurance can largely be enhanced. It can be found that when the volume V2 of the noise suppressing body is the same, road noise reducing effect is more excellent as the ratio (noise suppressing body cross section area/tire cavity area) is greater.

(Test D)

Next, assemblies each comprising a tire (195/65R15) and a rim (15 × 6JJ) were prototyped based on the specifications shown in Table 4, said tire having a noise suppressing body of a band-like body. Then, uniformity when the gap (g) between the one end and the other end of the noise suppressing body in the circumferential direction was changed, tire vibration based on the uniformity, presence or absence of rubbing between the ends, the road noise performance and the like were tested. Noise suppressing bodies having trapezoidal shaped meridional cross section (a = 30 mm, b = 50 mm, T = 50mm), and made of polyurethane sponge (open-cell) having specific gravity of 0.022, 0.016, 0.034 were employed. The noise suppressing body was fixed on the tire equator of the tire-side inner hole surface by adhesive, and the test was carried out.

(6) Uniformity

Using a uniformity testing machine, the weight unbalance (g), the RFV primary (N), and TFV primary (N) were measured.

(7) Tire vibration

The tires were mounted on all rims of a vehicle (Japanese FF vehicle, piston displacement of 2500 cc) under internal pressure of 200 kPa, and the vehicle was allowed to run on a smooth asphalt road circuit at a speed of 120 km/h, and the presence or absence of vibration was judged by a driver's sensory evaluation.

(8) Road noise performance

The test is the same as the road noise performance test (3).

(9) Rubbing between ends

The vehicle was allowed to run on a drum at a speed of 100 km/h through 20000 km under internal pressure of 200 kPa and load of 4.2 kN and then, the presence or absence of rubbing was visually checked.

Table 4-1

| | Conventional example | Embodiment D1 | Embodiment D2 | Embodiment D3 | Embodiment D4 | Embodiment D5 | Embodiment D6 | Embodiment D7 | Embodiment D8 | Embodiment D9 | Embodiment D10 | Embodiment D11 |
|---|---|---|---|---|---|---|---|---|---|---|---|---|
| Specific gravity of sponge | 0 | 0.022 | 0.022 | 0.022 | 0.022 | 0.022 | 0.022 | 0.022 | 0.022 | 0.022 | 0.022 | 0.016 |
| Gap g between ends | 0 | 0 (Adhesion) | 0 (Non-adhesion) | 2 | 5 | 7 | 10 | 13 | 16 | 20 | 95 | 0 (Non-adhesion) |
| Uniformity · Weight unbalance (g) | 0 | 0 | 0 | 1.0 | 2.6 | 3.6 | 5.2 | 6.7 | 8.3 | 10.3 | 49.0 | 0 |
| · RFV primary (N) | 20 | 21 | 21 | 27 | 29 | 35 | 38 | 45 | 42 | 43 | 65 | 23 |
| · TFV primary (N) | 44 | 45 | 45 | 47 | 47 | 57 | 59 | 62 | 61 | 71 | 149 | 46 |
| Road noise performance | Reference | -10.5 | -10.5 | -10.5 | -10.4 | -10.3 | -10.2 | -10.0 | -9.8 | -9.7 | -8.0 | -8.4 |
| Tire vibration | Absent | Absent | Absent | Absent | Absent | Absent | Absent | Absent | Absent | Absent | Generated | Absent |
| Rubbing between ends | - | Absent | Generated | Absent | Absent | Absent | Absent | - | - | - | - | Generated |

Table 4-2

| | Embodiment D12 | Embodiment D13 | Embodiment D14 | Embodiment D15 | Embodiment D16 | Embodiment D17 | Embodiment D18 | Embodiment D19 | Embodiment D20 | Embodiment D21 | Embodiment D22 |
|---|---|---|---|---|---|---|---|---|---|---|---|
| Specific gravity of sponge | 0.016 | 0.016 | 0.016 | 0.016 | 0.016 | 0.016 | 0.034 | 0.034 | 0.034 | 0.034 | 0.034 |
| Gap g between ends | 5 | 10 | 15 | 20 | 25 | 30 | 0 (Non-adhesion) | 5 | 10 | 15 | 20 |
| Uniformity • Weight unbalance (g) | 2.0 | 4.0 | 5.9 | 7.9 | 9.9 | 11.9 | 0 | 3.8 | 7.6 | 11.6 | 15.1 |
| • RFV primary (N) | 26 | 39 | 38 | 34 | 42 | 50 | 29 | 38 | 37 | 51 | 53 |
| • TFV primary (N) | 39 | 58 | 66 | 52 | 74 | 62 | 39 | 54 | 67 | 77 | 73 |
| Road noise performance | -8.3 | -8.1 | -7.9 | -7.6 | -7.4 | -7.2 | -10.7 | -10.6 | -10.5 | -10.3 | -10.1 |
| Tire vibration | Absent | Absent | Absent | Absent | Absent | Absent | Absent | Absent | Absent | Absent | Absent |
| Rubbing between ends | Absent | Absent | Absent | Absent | Absent | Absent | Generated | Absent | Absent | - | - |

As a result of the test, when the gap (g) between the one end and the other end of the noise suppressing body in the circumferential direction was 10 mm or more or when the one end and the other end of the noise suppressing body were joined with each other by adhesive, the wearing powder caused by rubbing could be suppressed. It was confirmed that as the gap (g) was increased, the uniformity or the road noise performance were lowered, but if the gap (g) was 300 mm or less, the tire vibration could be prevented from being generated while securing excellent road noise performance.

(Test E)

Next, noise suppressing bodies were adhered to ten tires (tire size: 215/60R16) using liquid adhesive or double-faces tape, and the adhering operation time was compared. Noise suppressing bodies having trapezoidal shaped meridional cross section (a = 30 mm, b = 50 mm, T = 50 mm), and made of polyurethane sponge (open-cell) having specific gravity of 0.022 were employed. The noise suppressing body was adhered on the tire equator of the tire-side inner hole surface over one circuit by adhesive.

As a result of the test, the adhering operation time using the liquid adhesive was 117 minutes, and the adhering operation time using the double-faces tape was 40 minutes, and it could be confirmed that the adhering operation time could be shortened to 35% or less if the double-faces tape was used. Here, three liquid type adhesive comprising tire side primer processing liquid, noise suppressing body side primer processing liquid and adhesive was used as the liquid adhesive.

(Test F)

Next, using the same noise suppressing bodies and tire as those in the test E, and the adhering strength of the noise suppressing body was tested while changing only materials of the double-faces tape. Table 5 shows the test result. Details of the double-faces tape used in this test are shown in Table 6. The same noise suppressing body and the tire as those in the test E were used.

(10) Adhering strength

<i> In accordance with ECE 30 standard, the vehicle was allowed to run on a drum in a step speed manner at speeds of from 200 km/h to 10 km/h for 20 minutes under internal pressure of 280 kPa and load of 5.26 kN. After the vehicle was run at 240 km/h, the adhering state of the noise suppressing body was visually observed.

<ii> Using the above-described peel test, peel strength at room temperature (25°C) and high temperature (120°C), and the bending and crack at low temperature (-35°C) were measured.

Table 5

| | Embodiment F1 | Embodiment F2 | Embodiment F3 | Embodiment F4 | Embodiment F5 | Embodiment F6 | Embodiment F7 | Embodiment F8 | Embodiment F9 | Embodiment F10 | Embodiment F11 |
|---|---|---|---|---|---|---|---|---|---|---|---|
| Double-faces tape | Type 1 | Type 2 | Type 3 | Type 4 | Type 5 | Type 6 | Type 7 | Type 8 | Type 9 | Type 10 | Type 11 |
| Adhering strength Peel test | Large peel | Large peel | Absent | Absent | Absent | Absent | Absent | Absent | Absent | (*1) | (*1) |
| • Peel strength (25°C) | 0 | 0.17 | 0.09 | 0.28 (*2) | 0.26 (*2) | 0.26 (*2) | 0.14 | 0.26 (*2) | 0.28 (*2) | 0.33 (*2) | 0.21 (*2) |
| • Peel strength (120°C) | 0 | 0.17 | 0.07 | 0.07 | 0.18 (*2) | 0.06 | 0.17 (*2) | 0.13 (*2) | 0.09 (*2) | 0 | 0 |
| • Bend crack (-35°C) | Absent | Absent | Absent | Absent | Absent | Absent | Absent | Absent | Absent | Absent | Absent |

*1 a mark showing that the tape was melted at high temperature

*2 noise suppressing body itself was broken and further measurement could not be carried out

Table 6

| | Manufacturer | Model | Adhesive | Base material |
|---|---|---|---|---|
| Type 1 | NITTO DENKO CORPORATION | 400 | Rubber-based adhesive | Polyester |
| Type 2 | SUMITOMO 3M Ltd. | Y4931 | Acrylic adhesive | Acrylic foam |
| Type 3 | SUMITOMO 3M Ltd. | Y4951 | Acrylic adhesive | Acrylic foam |
| Type 4 | NITTO DENKO CORPORATION | 468MP | Acrylic adhesive | No base material |
| Type 5 | NITTO DENKO CORPORATION | F9473PC | Acrylic adhesive | No base material |
| Type 6 | SUMITOMO 3M Ltd. | Y582A | Thermosetting adhesive | Nonwoven fabric |
| Type 7 | SUMITOMO 3M Ltd. | Y4604 | Acrylic adhesive | Acrylic foam |
| Type 8 | SUMITOMO 3M Ltd. | Y4608 | Acrylic adhesive | Acrylic foam |
| Type 9 | NITTO DENKO CORPORATION | VR5311 | Rubber/acrylic | Polyester |
| Type 10 | NITOMS Inc. | KZ12 | Rubber-based adhesive | Fabric |
| Type 11 | NITOMS Inc. | 525K | Butyl rubber-based adhesive | Cotton |

As a result of the test, it could be confirmed that a double-faces tape which could be used for adhering the noise suppressing body could be commercially available easily.

(Test G)

Next, a difference in adhering strength of the noise suppressing body when the adhering region (Y) of the tire-side cavity surface was formed into the smooth surface and formed into the low butyl-mixed region was tested, and a result of the test is shown in Table 7. The employed noise suppressing body is made of polyurethane sponge (open-cell) having a laterally long rectangular meridional cross section (width of 90 mm, height of 10 mm), and specific gravity of 0.022. A rubber paste adhesive was directly applied and adhered on the equator of an inner hole surface of the tire (215/60R16) without removing the releasing agent.

A width of the smooth surface was set to 100 mm by filling the vent groove of the bladder. A width of the low butyl-mixed region was set to 100 mm by providing a rubber region having no butyl-based rubber in the inner liner rubber.

(11) Adhering strength

The vehicle was allowed to run on a drum at a speed of 100 km/h through 20000 km under internal pressure of 200 kPa and load of 4.0 kN. Then, the adhesion state of the noise suppressing body around the tire was visually checked. The number of portions where adhesion was peeled by 10 mm or more was compared.

Table 7

| | Conventional example G | Embodiment G1 | Embodiment G2 | Embodiment G3 |
|---|---|---|---|---|
| • Bumps and dips in adhering region • Composition of butyl-based rubber | Surface having bumps and dips (formed by vent groove) butyl 100 wt% | Smooth surface butyl 100 wt% | Surface having bumps and dips (formed by vent groove) butyl 0 wt% | Smooth surface butyl 0 wt% |
| Adhering strength (The number of peeled portions of adhesive) | 12 | 3 | 4 | 1 |

As a result of the test, it can be confirmed that if the adhering region (Y) is formed into the smooth surface or into the low butyl-mixed region, the adhering strength can largely be enhanced, and if both the smooth surface and the low butyl-mixed region are employed, the effect can further be enhanced.

(Test H)

A difference in adhering strength of the noise suppressing body when the releasing agent of the tire was removed and when the tire and the noise suppressing body were subjected to the primer processing was tested and a result thereof is shown in Table 8. Noise suppressing bodies having trapezoidal shaped meridional cross section (a = 20 mm, b = 60 mm, T = 50 mm), and made of polyurethane sponge (open-cell) having specific gravity of 0.022 were employed. The noise suppressing body was adhered on the tire equator of the tire-side inner hole surface over one circuit by adhesive.

(12) Adhering strength

The vehicle was allowed to run on a drum at a speed of 120 km/h for 20 minutes under internal pressure of 300 kPa and load of 4.0 kN. The speed was increased by 10 k/h every 20 minutes until vibration in which the band-like body seemed to fall out was generated. The speed was increased until the speed reached 250 km/h.

Table 8

|  | Embodiment H1 | Embodiment H2 | Embodiment H3 | Embodiment H4 | Embodiment H5 |
|---|---|---|---|---|---|
| Adhesive *1 | Produced by NO-TAPE INDUSTRIAL CO., LTD <No. 9383> | | | | |
| Chemical removing procedure of releasing agent | × | × | O | O | × |
| Physical removing procedure of releasing agent (buffing) | × | O | × | × | × |
| Primer processing (tire side) *2 | × | × | O | O | O |
| Primer processing (band-like body) *3 | × | × | × | O | O |
| Adhering strength [km/h] | 220 | 250 Run through complete distance | 230 | 250 Run through complete distance | 250 Run through complete distance |

| *1 | Basic component: chloroprene rubber graft copolymer Solvent used: toluene, MEK Viscosity: about 7800 (mPa•s) Nonvolatile portion: about 25% |
|---|---|
| *2 | Produced by NO-TAPE INDUSTRIAL CO., LTD <P-740> Basic component: synthetic rubber Solvent used: toluene, MEK, ethyl acetate Nonvolatile portion: about 5% |
| *3 | Produced by NO-TAPE INDUSTRIAL CO., LTD <P-1> Basic component: synthetic rubber Solvent used: toluene, MEK, DMF Nonvolatile portion: about 2% |

As a result of the test, it can be confirmed that if the releasing agent of the tire is removed or both the tire and the noise suppressing body are subjected to the primer processing, the adhering strength can largely be enhanced.

Industrial Applicability

According to the assembly of the pneumatic tire and the rim in the first invention as described in detail, the noise suppressing body is fixed to the tire cavity, and a position of the center of gravity of the surface area of its meridional cross section is specified. Thus, the noise suppressing body can stably be fixed even during high speed running, and it is possible to prevent the noise suppressing body itself from being destroyed, and to enhance the road noise performance for the long term.

According to the noise suppressing body of the second invention, since its bottom surface is previously provided with adhesive coated with peel-paper, the adhering operation with respect to the tire and the rim can effectively and easily be carried out.

According to a storage method of the pneumatic tire of the third invention, in the pneumatic tire before it is assembled to the rim to which the noise suppressing body is fixed, the noise suppressing body is coated with waterproof protecting member. Thus, when the pneumatic tire before it is assembled to the rim is stored, it is possible to reliably prevent the noise suppressing body from absorbing water, and to prevent the quality of the tire from being deteriorated.

**Claims**

1.  An assembly (1) of a pneumatic tire (2) and a rim (3), comprising a noise suppressing body (5) provided in a tire cavity (4) formed between the rim (3) and the pneumatic tire (2) mounted to the rim (3), the noise suppressing body (5) having a volume (V2) which is 0.4 to 20% of an entire volume (V1) of the tire cavity (4) and made of sponge material extending in a circumferential direction of the tire (2), wherein
    the noise suppressing body (5) comprises a tire-side noise suppressing body (10) whose bottom surface (10B) is fixed to a tire-side cavity surface (4S1) surrounding the tire cavity (4),
    in a tire meridional cross section including a tire axis,
    a center of gravity (G) of the surface area of the tire-side noise suppressing body (10) is located in a range (Q) between a reference surface which is the bottom surface and an intermediate point of one half of a maximum height (T) from the reference surface (N) to the tip end (10A),
    **characterized in that**
    an adhering region (Y) of the tire-side cavity surface (4S1) to which the tire-side noise suppressing body (5) is adhered is formed into a smooth surface, thereby enhancing adhesive force.

2.  The assembly of the pneumatic tire and the rim according to claim 1, wherein the noise suppressing body main portion of the tire-side noise suppressing body (5) is formed into a trapezoidal shape, a triangular shape or a nose-like shape in which its width is reduced from the reference surface (N) toward the tip end (10A) in a tire meridional cross section.

3.  The assembly of the pneumatic tire and the rim according to claim 1 or 2, wherein the noise suppressing body main portion of the tire-side noise suppressing body (5) is formed into a trapezoidal shape, and the maximum height (T) is greater than a width (b) of the reference surface (N), and a ratio (a/b) of the width (b) of the reference surface (N) and a width (a) of the tip end (10A) is 0.3 to 0.8.

4.  The assembly of the pneumatic tire and the rim according to any one of claims 1 to 3, wherein the noise suppressing body main portion of the tire-side noise suppressing body is symmetric with respect to a tire equator (C) in the tire meridional cross section.

5.  The assembly of the pneumatic tire and the rim according to any one of claims 1 to 4, wherein the noise suppressing body (5) is provided therein with a hollow (5C) which is different from bubble.

6.  The assembly of the pneumatic tire and the rim according to any one of claims 1 to 5, wherein in a tire cavity (4) in the tire meridional cross section in which normal internal pressure is charged and no load is applied,
    a height in a radial direction of the tire (2) between the bead base line (BL) and a tire cavity equator point (IP) where the tire-side cavity surface (4S1) and the tire equator surface (CP) intersect with each other is defined as a tire cavity height (Hi),
    the tire cavity (4) has the following first to fourth tire cavity regions, the first tire cavity region (AR1) includes a region (a1) located tire radially inward of 10% height (h1) separated away from the bead base line (BL) by 10% of the tire cavity height (Hi), and a region (a2) located tire radially outward of 90% height separated radially outward away from 90% of the tire cavity height (Hi),
    the second tire cavity region (AR2) includes a region (a3) located outward from the 10% height (h1) and radially inward of the tire than 20% height (h2) separated away from the bead base line (BL) by 20% of the tire cavity height (Hi), and a region (a4) located outward of 80% height separated away from the bead base line (BL) by 80% of the tire cavity height (Hi) and radially inward of the tire from the 90% height,
    the third tire cavity region (AR3) includes a region (a5) located outward from the 20% height (h2) and radially inward of the tire than 30% height (h3) separated away from the bead base line (BL) by 30% of the tire cavity height (Hi), and a region (a6) located outward of 70% height (h7) separated by 70% of the tire cavity height (Hi) and radially inward of the tire from the 80% height,
    the fourth tire cavity region (AR4) is located outward from the 30% height (h3) and inward from the 70% height (h7), and when area ratios obtained by dividing areas s1, s2, s3 and s4 of noise suppressing bodies included in the first to fourth tire cavity regions (AR1 to AR4) by tire cavity area (A) are respectively defined as S1, S2, S3 and S4, a shape coefficient (E) expressed in the following equation 1) is 2 or higher:

$$E = 1.27 + 31.3 \times S1 + 47.3 \times S2 + 75.0 \times S3 + 121.4 \times S4 \dots 1).$$

7. The assembly of the pneumatic tire and the rim according to any one of claims 1 to 6, wherein the noise suppressing body (5) comprises one band-like body (12) which continuously extends in the tire circumferential direction, one end (e) and the other end (e) of the band-like body (12) in the tire circumferential direction are adhered to each other.

8. The assembly of the pneumatic tire and the rim according to any one of claims 1 to 6, wherein the noise suppressing body (5) comprises one band-like body (12) which continuously extends in the tire circumferential direction, one end (e) and the other end (e) disposed in the tire circumferential direction of the band-like body (12) are separated away from each other with a gap (g) of 10 to 300 mm in the circumferential direction.

9. The assembly of the pneumatic tire and the rim according to any one of claims 1 to 6, wherein the noise suppressing body (5) comprises a plurality of block pieces (13) arranged in the tire circumferential direction at distances from one another.

10. The assembly of the pneumatic tire and the rim according to any one of claims 1 to 9, wherein the noise suppressing body (5) is fixed to a tire-side cavity surface (4S1) by adhesive.

11. The assembly of the pneumatic tire and the rim according to any one of claims 1 to 10, wherein the tire-side cavity surface (4S1) is formed of inner liner rubber including a low butyl-mixed region comprising rubber component having lower mixing amount of butyl-based rubber, and a high butyl-mixed rubber comprising rubber component having higher mixing amount of butyl-based rubber, the low butyl-mixed region is provided with an adhering region (Y) where the tire-side noise suppressing body (5) is adhered, thereby enhancing adhesive force.

12. The assembly of the pneumatic tire and the rim according to claim 10, wherein the adhesive is a double-faces tape (41).

13. The assembly of the pneumatic tire and the rim according to claim 12, wherein the double-faces tape (41) has sheet base material (42) whose one surface and other surface are provided with adhesion layers (43A, 43B).

14. The assembly of the pneumatic tire and the rim according to claim 12, wherein the double-faces tape (41) is formed of only adhesion layer (43A, 43B) without having sheet base material (42).

15. The assembly of the pneumatic tire and the rim according to claim 13 or 14, wherein adhesion layers (43A, 43B) on the one surface and the other surface of the double-faces tape (41) are formed of different adhesion materials.

16. A noise suppressing body (5) used for the assembly of the pneumatic tire and the rim according to any one of claims 1 to 15, wherein the noise suppressing body (5) is made of sponge material and comprises a tire-side noise suppressing body (10) having a bottom surface (10B) for fixing the body to a tire-side cavity surface (4S1) surrounding the tire cavity (4), **characterized in that** the bottom surface (10B) has an adhesive coated with peel-paper.

17. The noise suppressing body (5) according to claim 16, wherein the noise suppressing body (5) comprises an annular body which goes round a tire-side cavity surface (4S1) in the tire circumferential direction.

18. A storage method of a pneumatic tire (2) before the pneumatic tire (2) is assembled to a rim (3) in which a noise suppressing body (5) used for the assembly of the pneumatic tire (2) and the rim (3) according to any one of claims 1 to 15 is fixed to a tire-side cavity surface (4S1), wherein
at least the noise suppressing body (5) of the pneumatic tire (2) is coated with a waterproof protecting member (20).

19. The storage method of the pneumatic tire according to claim 18, wherein the protecting member is a bag body (20A) for accommodating the entire pneumatic tire (2).

20. The storage method of the pneumatic tire according to claim 18, wherein the protecting member (20) is a box-like body (20B) for accommodating the entire pneumatic tire (2).

21. The storage method of the pneumatic tire according to claim 18, wherein the protecting member (20) is a disk-like body (20c) for covering a periphery of one bead portion (2a) of the pneumatic tire (2) and a periphery of the other bead portion (2a) of the pneumatic tire (2).

22. The storage method of the pneumatic tire according to claim 18, wherein the protecting member is a cylindrical body (20D) for covering between one bead portion (2a) and the other bead portion (2a) of the pneumatic tire (2).

23. The storage method of the pneumatic tire according to any one of claims 19 to 22, wherein the protecting member (20) is an ultraviolet radiation non-permeable member.


**Patentansprüche**

1. Anordnung (1) aus einem Luftreifen (2) und einer Felge (3), umfassend einen Geräuschunterdrückungskörper (5), der in einem Reifenhohlraum (4) vorgesehen ist, der zwischen der Felge (3) und dem auf die Felge (3) aufgezogenen Luftreifen (2) gebildet ist, wobei der Geräuschunterdrückungskörper (5) ein Volumen (V2) aufweist, das 0,4 bis 20 % eines Gesamtvolumens (V1) des Reifenhohlraums (4) beträgt und aus Schwammmaterial hergestellt ist, das sich in einer Umfangsrichtung des Reifens (2) erstreckt, wobei
   der Geräuschunterdrückungskörper (5) einen reifenseitigen Geräuschunterdrückungskörper (10) aufweist, dessen Unterseitenfläche (10B) an einer reifenseitigen Hohlraumfläche (4S1), die den Reifenhohlraum (4) umgibt, befestigt ist,
   in einem Reifenmeridianquerschnitt eine Reifenachse umfasst,
   ein Schwerpunkt (G) der Oberfläche des reifenseitigen Geräuschunterdrückungskörpers (10) in einem Bereich (Q) zwischen einer Bezugsfläche, die die Unterseitenfläche ist, und einem Zwischenpunkt bei einer Hälfte einer maximalen Höhe (T) von der Bezugsfläche (N) zu dem Vorderende (10A) angeordnet ist,
   **dadurch gekennzeichnet, dass**
   ein Klebebereich (Y) der reifenseitigen Hohlraumfläche (4S1) an die der reifenseitige Geräuschunterdrückungskörper (5) geklebt ist, zu einer glatten Oberfläche ausgebildet ist, wodurch die Klebekraft verbessert ist.

2. Anordnung aus dem Luftreifen und der Felge nach Anspruch 1,
   wobei der Hauptabschnitt des Geräuschunterdrückungskörpers des reifenseitigen Geräuschunterdrückungskörpers (5) zu einer Trapezform, zu einer dreieckigen Form oder zu einer nasenartigen Form ausgebildet ist, in welcher dessen Breite von der Bezugsfläche (N) in Richtung des Vorderendes (10A) im Reifenmeridianquerschnitt verringert ist.

3. Anordnung aus dem Luftreifen und der Felge nach Anspruch 1 oder 2, wobei der Hauptabschnitt des Geräuschunterdrückungskörpers des reifenseitigen Geräuschunterdrückungskörpers (5) zu einer Trapezform ausgebildet ist, und die maximale Höhe (T) größer ist als eine Breite (b) der Bezugsfläche (N), und ein Verhältnis (a/b) der Breite (b) der Bezugsfläche (N) und einer Breite (a) des Vorderendes (10A) 0,3 bis 0,8 beträgt.

4. Anordnung aus dem Luftreifen und der Felge nach einem der Ansprüche 1 bis 3, wobei der Hauptabschnitt des Geräuschunterdrückungskörpers des reifenseitigen Geräuschunterdrückungskörpers in Bezug auf einen Reifenäquator (C) im Reifenmeridianquerschnitt symmetrisch ist.

5. Anordnung aus dem Luftreifen und der Felge nach einem der Ansprüche 1 bis 4, wobei der Geräuschunterdrückungskörper (5) darin mit einer Höhlung (5C) versehen ist, die sich von einer Blase unterscheidet.

6. Anordnung aus dem Luftreifen und der Felge nach einem der Ansprüche 1 bis 5, wobei in einem Reifenhohlraum (4) im Reifenmeridianquerschnitt, bei normalem Innenfülldruck und ohne aufgebrachte Last,
   eine Höhe in einer radialen Richtung des Reifens (2) zwischen der Wulstbasislinie (BL) und dem Reifenhohlraumäquatorpunkt (IP), an dem die reifenseitige Hohlraumfläche (4S1) und die Reifenäquatorfläche (CP) einander schneiden, als eine Reifenhohlraumhöhe (Hi) definiert ist,
   der Reifenhohlraum (4) die folgenden ersten bis vierten Reifenhohlraumbereiche aufweist,
   wobei der erste Reifenhohlraumbereich (AR1) einen Bereich (a1), der bezüglich des Reifens radial innerhalb von 10 % Höhe (h1), die von der Wulstbasislinie (BL) 10 % der Reifenhohlraumhöhe (Hi) beabstandet ist, angeordnet ist, und einen Bereich (a2) umfasst, der bezüglich des Reifens radial außerhalb von 90 % Höhe, die radial außen 90 % von der Reifenhohlraumhöhe (Hi) beabstandet ist, angeordnet ist,
   wobei der zweite Reifenhohlraumbereich (AR2) einen Bereich (a3), der außerhalb von der 10 % Höhe (h1) und radial innerhalb von dem Reifen von 20 % Höhe (h2), die von der Wulstbasislinie (BL) 20 % der Reifenhohlraumhöhe (Hi) beabstandet ist, angeordnet ist, und einen Bereich (a4) umfasst, der außerhalb von 80 % Höhe, die von der Wulstbasislinie (BL) 80 % der Reifenhohlraumhöhe (Hi) beabstandet ist, und radial innerhalb von dem Reifen von der 90 % Höhe angeordnet ist,

wobei der dritte Reifenhohlraumbereich (AR3) einen Bereich (a5), der außerhalb von der 20 % Höhe (h2) und radial innerhalb von dem Reifen von 30 % Höhe (h3), die von der Wulstbasislinie (BL) 30 % der Reifenhohlraumhöhe (Hi) beabstandet ist, angeordnet ist, und einen Bereich (a6) umfasst, der außerhalb von 70 % Höhe (h7), die 70 % von der Reifenhohlraumhöhe (Hi) beabstandet ist, und radial innerhalb von dem Reifen von der 80 % Höhe angeordnet ist, wobei der vierte Reifenhohlraumbereich (AR4) außerhalb von der 30 % Höhe (h3) und innerhalb von der 70 % Höhe (h7) angeordnet ist,

und wenn Flächenverhältnisse, die durch Dividieren der Bereiche s1, s2, s3 und s4 von Geräuschunterdrückungskörpern, die in den ersten bis vierten Reifenhohlraumbereichen (AR1 bis AR4) enthalten sind, durch die Reifenhohlraumfläche (A) erhalten werden, jeweils als S1, S2, S3 und S4 definiert sind,

ein Formkoeffizient (E), der in der folgenden Gleichung 1) ausgedrückt ist, 2 oder höher ist:

$$E = 1{,}27 + 31{,}3 \times S1 + 47{,}3 \times S2 + 75{,}0 \times S3 + 121{,}4 \times S4 \quad \ldots 1).$$

7. Anordnung aus dem Luftreifen und der Felge nach einem der Ansprüche 1 bis 6, wobei der Geräuschunterdrük-kungskörper (5) einen bandartigen Körper (12) umfasst, der sich kontinuierlich in der Umfangsrichtung des Reifens erstreckt, wobei ein Ende (e) und das andere Ende (e) des bandartigen Körpers (12) in der Umfangsrichtung des Reifens aneinander geklebt sind.

8. Anordnung aus dem Luftreifen und der Felge nach einem der Ansprüche 1 bis 6, wobei der Geräuschunterdrük-kungskörper (5) einen bandartigen Körper (12) umfasst, der sich kontinuierlich in der Umfangsrichtung des Reifens erstreckt, wobei ein Ende (e) und das andere Ende (e), die in der Umfangsrichtung des Reifens des bandartigen Körpers (12) angeordnet sind, voneinander einen Spalt (g) von 10 bis 300 mm in der Umfangsrichtung beabstandet sind.

9. Anordnung aus dem Luftreifen und der Felge nach einem der Ansprüche 1 bis 6, wobei der Geräuschunterdrük-kungskörper (5) eine Vielzahl von Blockstücken (13) umfasst, die in der Umfangsrichtung des Reifens in Abständen voneinander angeordnet sind.

10. Anordnung aus dem Luftreifen und der Felge nach einem der Ansprüche 1 bis 9, wobei der Geräuschunterdrük-kungskörper (5) durch Klebstoff an einer reifenseitigen Hohlraumfläche (4S1) befestigt ist.

11. Anordnung aus dem Luftreifen und der Felge nach einem der Ansprüche 1 bis 9, wobei die reifenseitigen Hohlraumfläche (4S1) aus Innerliner-Kautschuk gebildet ist, der einen mit wenig Butyl gemischten Bereich mit einer Kautschukkomponente umfasst, die eine niedrigere Mischungsmenge auf Butyl basierendem Kautschuk aufweist, und einen mit viel Butyl gemischten Kautschuk mit einer Kautschukkomponente umfasst, die eine höhere Mischungsmenge von auf Butyl basierendem Kautschuk aufweist, wobei der mit wenig Butyl gemischte Bereich mit einem Klebebereich (Y) versehen ist, wo der reifenseitige Geräuschunterdrückungskörper (5) angeklebt ist, wodurch die Klebekraft verbessert ist.

12. Anordnung aus dem Luftreifen und der Felge nach Anspruch 10, wobei der Klebstoff ein doppelseitiges Klebeband (41) ist.

13. Anordnung aus dem Luftreifen und der Felge nach Anspruch 12, wobei das doppelseitige Klebeband (41) ein Bahnbasismaterial (42) aufweist, dessen eine Oberfläche und andere Oberfläche mit Klebstoffschichten (43A, 43B) versehen sind.

14. Anordnung aus dem Luftreifen und der Felge nach Anspruch 12, wobei das doppelseitige Klebeband (41) allein aus einer Klebeschicht (43A, 43B) gebildet ist, ohne Bahnbasismaterial (42) aufzuweisen.

15. Anordnung aus dem Luftreifen und der Felge nach Anspruch 13 oder 14, wobei Klebeschichten (43A, 43B) auf der einen Oberfläche und der anderen Oberfläche des doppelseitigen Klebebands (41) aus unterschiedlichen Klebe-materialien gebildet sind.

**EP 1 510 366 B1**

16. Geräuschunterdrückungskörper (5), der für die Anordnung aus dem Luftreifen und der Felge nach einem der Ansprüche 1 bis 15 verwendet wird, wobei der Geräuschunterdrückungskörper (5) aus Schwammmaterial hergestellt ist und einen reifenseitigen Geräuschunterdrückungskörper (10) umfasst, der eine Unterseitenfläche (10B) zur Befestigung des Körpers an einer reifenseitigen Hohlraumfläche (4S1), die den Reifenhohlraum (4) umgibt, aufweist, **dadurch gekennzeichnet, dass** die Unterseitenfläche (10B) einen mit Abziehpapier beschichteten Klebstoff aufweist.

17. Geräuschunterdrückungskörper (5) nach Anspruch 16, wobei der Geräuschunterdrückungskörper (5) einen kreisringförmigen Körper umfasst, der um eine reifenseitige Hohlraumfläche (4S1) in der Umfangsrichtung des Reifens verläuft.

18. Lagerverfahren eines Luftreifens (2), bevor der Luftreifen (2) auf eine Felge (3) aufgezogen wird, wobei ein Geräuschunterdrückungskörper (5), der für die Anordnung aus dem Luftreifen (2) und der Felge (3) nach einem der Ansprüche 1 bis 15 verwendet wird, an einer reifenseitigen Hohlraumfläche (4S1) befestigt ist, wobei zumindest der Geräuschunterdrückungskörper (5) des Luftreifens (2) mit einem wasserdichten Schutzelement (20) beschichtet wird.

19. Lagerverfahren des Luftreifens nach Anspruch 18, wobei das Schutzelement ein Taschenkörper (20A) zur Aufnahme des gesamten Luftreifens (2) ist.

20. Lagerverfahren des Luftreifens nach Anspruch 18, wobei das Schutzelement (20) ein kastenartiger Körper (20B) zur Aufnahme des gesamten Luftreifens (2) ist.

21. Lagerverfahren des Luftreifens nach Anspruch 18, wobei das Schutzelement (20) ein scheibenartiger Körper (20c) zur Bedeckung eines Umfangs von einem Wulstabschnitt (2a) des Luftreifens (2) und eines Umfangs des anderen Wulstabschnitts (2a) des Luftreifens (2) ist.

22. Lagerverfahren des Luftreifens nach Anspruch 18, wobei das Schutzelement ein zylindrischer Körper (20D) zur Bedeckung zwischen einem Wulstabschnitt (2a) und dem anderen Wulstabschnitt (2a) des Luftreifens (2) ist.

23. Lagerverfahren des Luftreifens nach einem der Ansprüche 19 bis 22, wobei das Schutzelement (20) ein für ultraviolette Strahlung undurchlässiges Element ist.

**Revendications**

1. Ensemble (1) composé d'un bandage pneumatique (2) et d'une jante (3), comprenant un corps de suppression de bruit (5) prévu dans une cavité de bandage (4) formée entre la jante (3) et le bandage pneumatique (2) monté sur la jante (3), le corps de suppression de bruit (5) ayant un volume (V2) qui représente de 0,4 à 20 % de tout le volume (V1) de la cavité de bandage (4) et réalisé avec un matériau spongieux s'étendant dans une direction circonférentielle du bandage (2), dans lequel :

le corps de suppression de bruit (5) comprend un corps de suppression de bruit côté bandage (10) dont la surface inférieure (10B) est fixée sur une surface de cavité côté bandage (4S1) entourant la cavité de bandage (4), dans une section transversale méridionale du bandage comprenant un axe de bandage, un centre de gravité (G) de la surface du corps de suppression de bruit côté bandage (10) est situé dans une plage (Q) entre une surface de référence qui est la surface inférieure et un pont intermédiaire d'une moitié d'une hauteur maximum (T) de la surface de référence (N) jusqu'à l'extrémité de pointe (10A),

**caractérisé en ce que** :

une surface d'adhérence (Y) de la surface de cavité côté bandage (4S1) sur laquelle le corps de suppression de bruit du côté bandage (5) est fixé, est formée dans une surface lisse, améliorant ainsi la force adhésive.

2. Ensemble composé du bandage pneumatique et de la jante selon la revendication 1, dans lequel la partie principale du corps de suppression de bruit du corps de suppression de bruit du côté bandage (5) est formée selon une forme trapézoïdale, une forme triangulaire ou une forme en forme de nez dans laquelle sa largeur est réduite de la surface de référence (N) vers l'extrémité de pointe (10A) dans une section transversale méridionale du bandage.

24

**3.** Ensemble composé du bandage pneumatique et de la jante selon la revendication 1 ou 2, dans lequel la partie principale du corps de suppression de bruit du corps de suppression de bruit du côté bandage (5) est formée selon une forme trapézoïdale, et la hauteur maximum (T) est supérieure à une largeur (b) de la surface de référence (N), et un rapport (a/b) de la largeur (b) de la surface de référence (N) et d'une largeur (a) de l'extrémité de pointe (10A) est de 0,3 à 0,8.

**4.** Ensemble composé du bandage pneumatique et de la jante selon l'une quelconque des revendications 1 à 3, dans lequel la partie principale du corps de suppression de bruit du corps de suppression de bruit du côté bandage est symétrique par rapport à un équateur de bandage (C) dans la section transversale méridionale du bandage.

**5.** Ensemble composé du bandage pneumatique et de la jante selon l'une quelconque des revendications 1 à 4, dans lequel le corps de suppression de bruit (5) est doté à l'intérieur d'un creux (5C) qui est différent d'une bulle.

**6.** Ensemble composé du bandage pneumatique et de la jante selon l'une quelconque des revendications 1 à 5, dans lequel dans une cavité de bandage (4) dans la section transversale méridionale du bandage dans laquelle la pression interne normale est chargée et aucune charge n'est appliquée,
une hauteur dans une direction radiale du bandage (2) entre une ligne de base de talon (BL) et un point d'équateur de cavité de bandage (IP) où la surface de cavité du côté bandage (4S1) et la surface d'équateur de bandage (CP) se coupent, est définie comme étant une hauteur de cavité de bandage (Hi),
la cavité de bandage (4) a de la première à la quatrième région de cavité de bandage suivantes, la première région de cavité de bandage (AR1) comprend une région (a1) située radialement à l'intérieur du bandage sur 10 % de la hauteur (h1) séparée de la ligne de base de talon (BL) par 10 % de la hauteur de cavité de bandage (Hi), et une région (a2) située radialement à l'extérieur du bandage sur 90 % de hauteur séparée radialement vers l'extérieur à 90 % de la hauteur de la cavité de bandage (Hi),
une seconde région de cavité de bandage (AR2) comprend une région (a3) située à l'extérieur sur 10 % de la hauteur (h1) et radialement à l'intérieur du bandage sur 20 % de la hauteur (h2) séparée de la ligne de base de talon (BL) par 20 % de la hauteur de la cavité de bandage (Hi), et une région (a4) située à l'extérieur de 80 % de la hauteur séparée de la ligne de base de talon (BL) par 80 % de la hauteur de cavité de bandage (Hi) et radialement vers l'intérieur du bandage par rapport à 90 % de la hauteur,
la troisième région de cavité de bandage (AR3) comprend une région (a5) située vers l'extérieur par rapport à 20 % de la hauteur (h2) et radialement vers l'intérieur du bandage sur 30 % de la hauteur (h3) séparée de la ligne de base de talon (BL) par 30 % de la hauteur de la cavité de bandage (Hi), et une région (a6) située à l'extérieur de 70 % de la hauteur (h7) séparée par 70 % de la hauteur de la cavité de bandage (Hi) et radialement vers l'intérieur du bandage par rapport à 80 % de la hauteur,
la quatrième région de cavité de bandage (AR4) est située à l'extérieur de 30 % de la hauteur (h3) et vers l'intérieur par rapport à 70 % de la hauteur (h7),
et lorsque les rapports de surface obtenus en divisant les surfaces s1, s2, s3 et s4 des corps de suppression de bruit compris de la première à la quatrième région de cavité de bandage (AR1 à AR4) par la surface de cavité de bandage (A) sont respectivement définis comme étant S1, S2, S3 et S4,
un coefficient de forme (E) exprimé par l'équation suivante 1) est de 2 ou supérieur :

$$E = 1{,}27 + 31{,}3 \times S1 + 47{,}3 \times S2 + 75{,}0 \times S3 + 121{,}4 \times S4 \dots 1)$$

**7.** Ensemble composé du bandage pneumatique et de la jante selon l'une quelconque des revendications 1 à 6, dans lequel le corps de suppression de bruit (5) comprend un corps en forme de bande (12) qui s'étend de manière continue dans la direction circonférentielle du bandage, une extrémité (e) et l'autre extrémité (e) du corps en forme de bande (12) dans la direction circonférentielle du bandage sont fixées l'une à l'autre.

**8.** Ensemble composé du bandage pneumatique et de la jante selon l'une quelconque des revendications 1 à 6, dans lequel le corps de suppression de bruit (5) comprend un corps en forme de bande (12) qui s'étend de manière continue dans la direction circonférentielle du bandage, une extrémité (e) et l'autre extrémité (e) disposées dans la direction circonférentielle du bandage du corps en forme de bande (12) sont séparées l'une de l'autre par un espace (g) de 10 à 300 mm dans la direction circonférentielle.

**9.** Ensemble composé du bandage pneumatique et de la jante selon l'une quelconque des revendications 1 à 6, dans lequel le corps de suppression de bruit (5) comprend une pluralité de pièces de bloc (13) agencées dans la direction circonférentielle du bandage à des certaines distances les unes des autres.

10. Ensemble composé du bandage pneumatique et de la jante selon l'une quelconque des revendications 1 à 9, dans lequel le corps de suppression de bruit (5) est fixé sur la surface de cavité du côté bandage (4S1) par adhésif.

11. Ensemble composé du bandage pneumatique et de la jante selon l'une quelconque des revendications 1 à 10, dans lequel la surface de cavité du côté bandage (4S1) est formée avec du caoutchouc de revêtement interne comprenant une région à faible mélange de butyle comprenant un composant de caoutchouc ayant une faible quantité de mélange de caoutchouc à base de butyle et un caoutchouc à mélange élevé de butyle comprenant un composant de caoutchouc ayant une quantité de mélange supérieure de caoutchouc à base de butyle, la région à faible mélange de butyle est prévue avec une région d'adhésion (Y) où le corps de suppression de bruit du côté bandage (5) est fixé, améliorant ainsi la force d'adhérence.

12. Ensemble composé du bandage pneumatique et de la jante selon la revendication 10, dans lequel l'adhésif est un ruban à double face (41).

13. Ensemble composé du bandage pneumatique et de la jante selon la revendication 12, dans lequel le ruban à double face (41) a un matériau à base de feuille (42) dont une surface et l'autre surface sont prévues avec des couches d'adhésion (43A, 43B).

14. Ensemble composé du bandage pneumatique et de la jante selon la revendication 12, dans lequel le ruban à double face (41) est formé uniquement avec la couche d'adhésion (43A, 43B) sans avoir le matériau à base de feuille (42).

15. Ensemble composé du bandage pneumatique et de la jante selon la revendication 13 ou 14, dans lequel les couches d'adhésion (43A, 43B) sur la surface et l'autre surface du ruban à double face (41) sont formées avec des matériaux d'adhésion différents.

16. Corps de suppression de bruit (5) utilisé pour l'ensemble composé du bandage pneumatique et de la jante selon l'une quelconque des revendications 1 à 15, dans lequel le corps de suppression de bruit (5) est réalisé avec un matériau spongieux et comprend un corps de suppression de bruit du côté bandage (10) ayant une surface inférieure (10B) pour fixer le corps sur une surface de cavité du côté bandage (4S1) entourant la cavité de bandage (4), **caractérisé en ce que** la surface inférieure (10B) a un adhésif recouvert de papier anti-adhésif.

17. Corps de suppression de bruit (5) selon la revendication 16, dans lequel le corps de suppression de bruit (5) comprend un corps annulaire qui circule sur une surface de cavité du côté bandage (4S1) dans la direction circonférentielle du bandage.

18. Procédé de stockage d'un bandage pneumatique (2) avant que le bandage pneumatique (2) n'a été assemblé sur une jante (3) dans laquelle un corps de suppression de bruit (5) utilisé pour l'ensemble composé du bandage pneumatique (2) et de la jante (3) selon l'une quelconque des revendications 1 à 15, est fixé sur la surface de cavité du côté bandage (4S1), dans lequel au moins le corps de suppression de bruit (5) du bandage pneumatique (2) est recouvert avec un élément de protection imperméable à l'eau (20).

19. Procédé de stockage de bandage pneumatique selon la revendication 18, dans lequel l'élément de protection est un corps de sac (20A) pour loger tout le bandage pneumatique (2).

20. Procédé de stockage de bandage pneumatique selon la revendication 18, dans lequel l'élément de protection (20) est un corps en forme de boîte (20B) pour loger tout le bandage pneumatique (2).

21. Procédé de stockage de bandage pneumatique selon la revendication 18, dans lequel l'élément de protection (20) est un corps en forme de disque (20c) pour recouvrir une périphérie d'une partie de talon (2a) du bandage pneumatique (2) et une périphérie de l'autre partie de talon (2a) du bandage pneumatique (2).

22. Procédé de stockage de bandage pneumatique selon la revendication 18, dans lequel l'élément de protection est un corps cylindrique (20D) pour le recouvrement entre une partie de talon (2a) et l'autre partie de talon (2a) du bandage pneumatique (2).

23. Procédé de stockage de bandage pneumatique selon l'une quelconque des revendications 19 à 22, dans lequel l'élément de protection (20) est un élément non perméable aux rayonnements ultraviolets.

# FIG.1

## FIG.2

## FIG.3

FIG.4

FIG.5

# FIG.6(A)

5A(10A)

T

T/2

G

b

5B(10B)

# FIG.6(B)

5A(10A)

T

T/2

G

b

5B(10B)

# FIG.6(C)

5A(10A)

T

T/2

G

b

5B(10B)

# FIG.6(D)

5A(10A)

T

T/2

G

b

5B(10B)

# FIG.6(E)

5A(10A)

T

5C

G

b

5B(10B)

## FIG.7

## FIG.8(A)

41
43A  42  43B'

2

5(10)

## FIG.8(B)

41
43A  43B'

## FIG.9

45

45a

44  41

## FIG.10

EP 1 510 366 B1

# FIG.11

FIG.12

# FIG.13

(AR1)a2

(AR2)a4

(AR3)a6

AR4

(AR3)a5

(AR2)a3

(AR1)a1

s1

s2

s3

s4

c

a(b)

16

15

11

BL(N)

EP 1 510 366 B1

## FIG.14(A)

11(12)

3(4S2)

## FIG.14(B)

11(13)

3(4S2)

## FIG.15(A)

20(20A)

2

## FIG.15(B)

20(20B)

2

## FIG.15(C)

2a

20(20C)

## FIG.15(D)

20(20D)

2a

EP 1 510 366 B1

## FIG.16(E)

**FIG.16(A)**

5cm

1cm

5B(10B)

**FIG.16(B)**

2cm

5cm

5B(10B)

10cm

1cm

5B(10B)

**FIG.16(F)**

**FIG.16(C)**

4cm

5cm

10cm

2cm

5B(10B)

5B(10B)

**FIG.16(G)**

**FIG.16(D)**

2cm

4cm

2.5cm

10cm

5B(10B)

5B(10B)

## FIG.17(A)

2cm

5cm

5B(10B)

6cm

## FIG.17(B)

2cm

3cm  5cm

1cm

5B(10B)

6cm

## FIG.17(C)

7cm

5B(10B)

5cm

## FIG.17(D)

7cm

5B(10B)

5cm

**FIG.18(A)**

2cm

5cm

5B(10B)

4cm

**FIG.18(B)**

3cm

3cm

5B(10B)

4cm

**FIG.18(C)**

2cm

1cm

1cm

4cm

7.5cm

5B(10B)

4cm

# FIG.19(A)

5B(10B)

3.5cm

7.5cm

4cm

# FIG.19(B)

8cm

1cm

4cm

5B(10B)

4cm

**EP 1 510 366 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002067608 A
- US 4392522 A
- EP 1253025 A